Europäisches Patentamt

European Patent Office

Office européen des brevets

(19)

(11) Veröffentlichungsnummer: **0 261 471**
**B1**

(12) **EUROPÄISCHE PATENTSCHRIFT**

(45) Veröffentlichungstag der Patentschrift:
18.07.90

(21) Anmeldenummer: 87112863.3

(22) Anmeldetag: 03.09.87

(51) Int. Cl.⁵: **E06B 3/66,** B65G 47/61,
B62B 3/10

(54) Vorrichtung zum Speichern von Abstandhalterrahmen für Isolierglasscheiben.

(30) Priorität: 23.09.86 DE 3632282

(43) Veröffentlichungstag der Anmeldung:
30.03.88 Patentblatt 88/13

(45) Bekanntmachung des Hinweises auf die Patenterteilung:
18.07.90 Patentblatt 90/29

(84) Benannte Vertragsstaaten:
AT BE CH DE FR GB IT LI NL

(56) Entgegenhaltungen:
DE-A- 2 918 699
DE-A- 3 408 677
DE-B- 2 712 651
DE-C- 147 417
US-A- 3 101 852
US-A- 3 799 318

(73) Patentinhaber: Franz Xaver Bayer Isolierglasfabrik KG,
Schwimmbadstrasse 2, D-7807 Elzach(DE)

(72) Erfinder: Bayer, Franz, Schwimmbadstrasse 1,
D-7807 Elzach(DE)

(74) Vertreter: Patentanwälte Dipl.-Ing. Hans Schmitt
Dipl.-Ing. Wolfgang Maucher, Dreikönigstrasse 13,
D-7800 Freiburg i.Br.(DE)

## Beschreibung

Die Erfindung betrifft eine Vorrichtung zum Speichern und insbesondere auch zum Transportieren von Abstanthalter-Rahmen für Isolierglasscheiben nach der Herstellung und vor ihrem Zusammenbau mit den Einzelscheiben einer Isolierglasscheibe mit einer Aufnahme od. dgl. für die fertiggestellten Rahmen.

Beispielsweise aus der DE-OS 32 21 986 ist eine Maschine zur Herstellung solcher Abstandhalterrahmen bekannt, welche dabei aus einem einzigen durchgehenden Profil in die gewünschte Rahmenform und -größe gebogen werden

Es sind aber auch andere Fertigungen solcher abstandhaltenden Innenrahmen für Isolierglasscheiben bekannt, bei denen beispielsweise auf Gehrung geschnittene Rahmenholme in den Eckbereichen verbunden werden.

In all diesen Fällen sind anschließend diese Abstandhalterrahmen der weiteren Fertigung der Isolierglasscheiben zuzuführen, wobei bei einer Serienfertigung gleich große Rahmen immer wieder zu derselben Stelle oder bei Fertigung unterschiedlich großer Isolierglasscheiben solche Rahmen eventuell auch an unterschiedliche Fertigungsstellen zu bringen sind. Dies wird bisher in personalaufwendiger und wenig rationeller Weise mit üblichen Transportmitteln bewerkstelligt. Besonders ungünstig ist es dabei, wenn Rahmen schon auf Vorrat gefertigt werden, bevor sie dann für die weitere Fertigung abgenommen werden.

Ein Beispiel für die Fertigung von Isolierglasscheiben zeigt dabei die US-PS 4 145 237.

Aus der AT-PS 253 424 ist eine Vorrichtung zur Handhabung, zum Transport und zur Lagerung von Glastafeln od.dgl. bekannt, die regalartig ausgebildet ist und mit üblichen Transportmitteln von einem Ort zum anderen gebracht werden kann.

Aus der US-PS 3 937 329 ist ein Transportgestell für Glasplatten bekannt, welches ebenfalls das Einstellen mehrerer solcher Glasplatten und deren Abstützung erlaubt und mittels Rädern verfahrbar ist.

Diese vorbekannten Vorrichtungen und Transportmittel sind dabei ganz speziell auf Glasplatten oder Glastafeln ausgerichtet und nicht zur Zuführung von Abstandhalterrahmen zur weiteren Fertigung von Isolierglasscheiben vorgesehen oder geeignet.

Der Erfindung liegt deshalb die Aufgabe zugrunde, eine Vorrichtung der eingangs erwähnten Art zu schaffen, die eine Speicherung eines Vorrates von Abstandhalterrahmen und erforderlichenfalls - vor allem bei großer Entfernung zwischen der Rahmenfertigung und deren Weiterverwendung beim Zusammenbau der Isolierglasscheiben - auch den Transport der Rahmen zu den nachfolgenden Fertigungs-Stellen erlaubt, wobei die Übergabe der Rahmen zur Weiterverarbeitung weitestgehend mechanisiert werden können soll.

Zur Lösung dieser Aufgabe ist die Vorrichtung der eingangs erwähnten Art dadurch gekennzeichnet, daß sie eine auf- und abverstellbare Aufhängevorrichtung für die Rahmen hat, die wenigstens zwei beabstandete Tragholme od.dgl. auf gleicher Höhe aufweist, daß die Aufnahme od. dgl. unterhalb der Aufhängevorrichtung angeordnet ist, über welcher die Tragholme etwa horizontal vorstehen, daß die Tragholme gegenüber der Aufnahme in ihrer Längserstreckungsrichtung rückziebar, in dieser Position absenkbar und auf der Höhe des von den Rahmen umgrenzten freien Raumes wieder vorschiebbar und mit den Rahmen anhebbar ist und daß die Aufhängevorrichtung außerdem eine Vereinzelungsvorrichtung für die von ihr getragenen Rahmen hat.

Diese Vorrichtung erlaubt also ein Aufnehmen vieler Rahmen, wobei die Rahmen etwa karteikartenartig nebeneinander und gegebenenfalls schon der Größe nach geordnet aufgenommen werden können. Die vorgeschaltete Herstellungsmaschine muß also nicht unbedingt ständig Rahmen gleicher Größe fertigen, weil die Aufnahme der Bedienungsperson der Maschine erlaubt, die Rahmen dann je nach Größe anzuordnen. Insbesondere bei einer Serienfertigung hingegen können die dann jeweils gleich großen Rahmen einfach hintereinander aufgestellt werden. Ist die Aufnahme der Vorrichtung gefüllt oder werden die Rahmen an einer anderen Stelle benötigt, können die Tragholme gegenüber der Abstellfläche zunächst zurückgezogen, dann abgesenkt und in dieser Position wieder in das Innere der Rahmen vorgeschoben werden. Beim Anheben der Rahmen werden diese dann in vorteilhafter Weise durch die vorzugsweise parallelen Tragholme mit ihren oberen Rahmenschenkeln jeweils auf gleicher Höhe und parallel ausgerichtet, so daß später eine Abnahmevorrichtung nach der Vereinzelung der Rahmen jeden einzelnen Rahmen in gleicher Weise erfassen kann. Die erfindungsgemäße Merkmalskombination erlaubt also eine rationelle Speicherung und Bereitstellung der Abstandhalterrahmen für ihre weitere Verarbeitung beim Zusammenbau von Isolierglasscheiben.

Einen ganz erheblichen Vorteil stellt dabei die zur Erfindung gehörende Vereinzelungsvorrichtung an der Aufhängevorrichtung dar, weil dadurch praktisch in die erfindungsgemäße Vorrichtung selbst eine Einrichtung zur Übergabe des jeweils einzelnen Rahmens an ein Transportmittel od.dgl. der nachfolgenden Fertigungsstation integriert ist.

Die vorbeschriebene Vorrichtung kann in vorteilhafter Weise entweder als stationäres Magazin oder aber selbst als Transportvorrichtung ausgestaltet sein. In letzterem Falle kann die Vorrichtung in beliebiger Weise von einer zur anderen Stelle transportiert werden. Beispielsweise könnte sie mit einem Gabelstapler oder von einem Hallenkran od.dgl. aufgenommen werden.

Eine ganz besonders günstige und preiswerte Vorrichtung der erfindungsgemäßen Art kann dadurch ausgestaltet sein, daß sie als Magazin an einer weiterfördernden oder weiterverarbeitenden Vorrichtung für die Rahmen, vorzugsweise einer Vorrichtung zum Auftragen von Dichtungsmasse auf die Rahmen, insbesondere stationär angeordnet ist und ihr zumindest ein Fördermittel mit einer Aufnahme für die Rahmen, vorzugsweise ein Förderwagen zugehört, welcher an der Vorrichtung in den Bereich der zurückgezogenen Tragholme paßt. In diesem Falle ist also die gesamte Vorrichtung praktisch zweiteilig, wobei der wichtige Teil mit den Tragholmen zum Speichern der fertiggestellten Rahmen zweckmäßigerweise dort insbesondere stationär vorgesehen werden kann, wo die Rahmen auch wieder für die weitere Bearbeitung abgegeben werden. Der Transport zwischen der Herstellungsmaschine für die Rahmen und diesem Speicher oder Magazin kann dann mit dem erwähnten zugehörigen Fördermittel, vorzugsweise einem Förderwagen erfolgen, von welchem die Rahmen mittels der Tragholme übernommen werden können, bevor sie dann wiederum von der Vorrichtung in angehobener Position weitergegeben werden können.

Besonders zweckmäßig ist es dabei, wenn die Aufnahme unterhalb der Aufhängevorrichtung oder auf dem Förderwagen zum Abstellen der Rahmen ausgebildet ist, vorzugsweise eine Abstellfläche ist. Zwar könnten die Rahmen auch von Klammern, Aufhängevorrichtungen od.dgl. aufgenommen sein, jedoch ist eine besonders einfache Lösung darin zu sehen, als Aufnahme für die Rahmen eine Abstellfläche vorzusehen, wo die Rahmen karteikartenartig angeordnet und somit schon beim Abstellen gegebenenfalls vorsortiert werden können.

Wie bereits erwähnt, könnte die Vorrichtung zum Speichern der Rahmen auch selbst gleichzeitig zum Transportieren dieser Rahmen dienen. In diesem Falle ist es zweckmäßig, wenn die Vorrichtung ein Fahrgestell mit Rädern aufweist. Sie kann dann unabhängig von sonstigen Fördermitteln von der einen zur anderen Stelle gebracht werden.

Ferner können auch mehrere derartige Vorrichtungen gleichzeitig im Endbereich einer Fertigungsmaschine angeordnet sein, falls diese aufgrund einer ihr eingegebenen Programmierung gegebenenfalls Rahmen unterschiedlicher Größe nacheinander abgibt, die dann aber jeweils in gleicher Größe auf einer derartigen Vorrichtung gespeichert und weitertransportiert werden sollen.

Eine konstruktiv besonders zweckmäßige Ausgestaltung der Erfindung kann darin bestehen, daß die Aufhängevorrichtung an wenigstens einer, vorzugsweise zwei parallelen, insbesondere vertikalen Führungsstangen hin- und her- sowie auf- und abwärtsbewegbar gelagert ist, wobei die Führungsstangen vorzugsweise an einem Rand der Aufnahme oder der Abstellfläche angeordnet sind, und daß am gegenüberliegenden Rand der Aufnahme oder Abstellfläche diese begrenzende Rungen od.dgl. Abstützungen vorgesehen sind, die vorzugsweise lösbar befestigt sind. Es ergibt sich somit eine Aufnahme bzw. Abstellfläche, bei welcher die Rahmen zwischen den Führungsstangen und den Rungen karteikartenartig angeordnet bzw. eingestellt werden können, wobei vor allem dann lösbare Rungen zweckmäßig sind, wenn relativ kleine Rahmen erfaßt werden müssen, so daß die Tragholme tiefer als die Höhe dieser Rungen abgesenkt werden müssen.

Die vertikalen Führungsstangen können zweckmäßigerweise im Querschnitt hohl und einseitig offen, vorzugsweise U- oder C-förmig ausgebildet sein, wobei die Öffnungen der C-Profile einander zugewandt sind und die Aufhängevorrichtung für jede Führungsstange kann ein Fahrgestell haben, welches für die geführte Auf- und Abwärtsbewegung ins Innere dieses Profiles eingreifende Rollen hat, wobei außerdem an parallelen, horizontalen Führungsstangen oder Tragholmen der Aufhängevorrichtung außenseitig Rollen für deren horizontale Verschiebung angreifen. Durch ein derartiges Fahrgestell an profilierten Säulen oder Führungsstangen sind die gewünschten verschiedenen Bewegungen der Tragholme auf einfache Weise realisierbar. Für die horizontale Verschiebung der Tragholme können dabei an dem Fahrgestell je zwei die Tragholme oder deren Führung von oben und je zwei von unten beaufschlagende Rollen vorgesehen sein, damit diese Tragholme in allen horizontalen Postionen sicher gehalten sind und dieses Fahrgestell die unterschiedlichen vom Gewicht der Tragholme und eventuell der daran hängenden Rahmen ausgehenden Momente aufnehmen können.

Zweckmäßig ist es dabei, wenn die vier Führungsrollen eines Fahrgestelles für die Horizontalverstellung der Tragholme an einer Platte gelagert sind, die gegenüber der der Abstellfläche zugewandten Seite der Führungsstangen zurückversetzt ist oder bündig damit abschließt und vorzugsweise nach der anderen Seite der Führungsstange übersteht. Durch diesen Übestand ergibt sich ein genügend großer horizontaler Abstand der Führungsrollen, um die vorerwähnten Momente gut aufnehmen zu können. Die Rückversetzung der Mitte dieser Rollenanordnung gegenüber der Führungsstange erlaubt dabei das Zurückziehen der Tragholme bis in den vorderen Umriß der Führungsstangen, so daß selbst solche Rahmen von den Tragholmen erfaßt werden können, die an diese Führungsstangen angelegt sind. Eine Zerstörung oder Verformung solcher Rahmen beim Absenken der Tragholme kann also vermieden werden, da diese durch die vorerwähnte Anordnung des Fahrgestelles genügend weit zurückgezogen werden können.

Um das Abnehmen der Rahmen von den Tragholmen möglichst einfach und ohne großen maschinellen und mechanischen Aufwand dennoch mit großer Sicherheit durchführen zu können, ist es zweckmäßig, wenn die vertikalen Führungsstangen und die Führungsvorrichtung für die Aufhängevorrichtung derart ausgebildet sind, daß in der obersten Position der Aufhängevorrichtung die Tragholme mit ihrem freien Ende soweit schräg nach unten kippbar sind, daß die angehängten Rahmen aufgrund der Schwerkraft selbsttätig gegen dieses Freie Ende hin gleiten, wobei ein Anschlag für diese Rahmen vorgesehen ist. Auf diese Weise kann ein eigenes Transportmittel zum Befördern der aufgehängten Rahmen von den Tragholmen herunter vermieden werden. Dabei können die Tragholme um etwa 10° bis 20° gegenüber einer Horizontalen kippbar sein.

Zur Vereinzelung der von der Aufhängevorrichtung getragenen Rahmen kann ein Hebel im Bereich des Anschlages für die Rahmen an den Tragholmen schwenkbar gelagert sein, welcher mit dem einen Ende jeweils den vordersten Rahmen im Bereich des Anschlages untergreift und von einer Betätigungsvorrichtung beaufschlagt ist, wobei der Schwenkweg des Hebels im Bereich des Anschlages wenigstens der Höhe dieses Anschlages entspricht.

Wird durch die Betätigung dieses Hebels also der vorderste Rahmen eines Tragholmes erfaßt und angehoben, können die übrigen Rahmen wiederum bis zu dem Anschlag vorrutschen. Wird nun der Hebel wieder abgesenkt, kann dieser angehobene Rahmen über den Anschlag und den sich noch anschließenden Teil des schrägen Holmes soweit gleiten, bis er von einer Abnahmevorrichtung einer weiterverarbeitenden Maschine od.dgl. erfaßt werden kann. Dies wird unterstützt, wenn die der Anschlagfläche abgewandte Seite des Anschlages schräg gegen die Oberseite des Homes abfällt.

Die Übergabe eines vereinzelten Rahmens ist also denkbar einfach, weil er praktisch selbsttätig zu einem Fördermittel, sei es einer mit Haken bestückten Kette od.dgl. oder auch einem Förderband weitergleiten und dem entsprechenden Transportelement dieses Fördermittels übernommen werden kann. Die "aktive" Übergabe durch die erfindungsgemäße Vorrichtung erfolgt dabei durch die erwähnte Schrägstellung, die den Rahmen entsprechend abgleiten läßt.

Um eine störfreie Vereinzelung der Rahmen und insbesondere das störungsfreie Anheben eines Rahmens ohne Mitnahme der bis dahin daran liegenden weiteren Rahmen zu erleichtern, ist es besonders vorteilhaft, wenn der Anschlag gegenüber der Stirnseite des Hebels zurückversetzt ist, so daß diese Stirnseite ihrerseits so lange einen Anschlag für die verbleibenden Rahmen bildet, wie der Hebel mit einem vereinzelten Rahmen in Anhebeposition ist. Dadurch wird ein vorzeitiges Nachrutschen der verbleibenden Rahmen also vermieden, so daß dieser Hebel eine Doppelfunktion hat. Erst nach dem Abgeben des vereinzelten Rahmens und der Rückstellung des Hebels können die übrigen Rahmen wieder bis an den Anschlag vorrutschen, wobei nun der nächste Rahmen mit einem Innenumriß über dem ihn im nächsten Arbeitstakt erfassenden Ende des Hebels an dem festen Anschlag zu liegen kommt. Dadurch wird also auch gleichzeitig sichergestellt, daß der Hebel in die Innenseite eines solchen Rahmens eingreifen kann. Selbstverständlich ist der Überstand dabei geringer als die Rahmenbreite, so daß er nicht auch noch in den nächsten Rahmen eingreifen kann.

Zur Beaufschlagung des Hebels zum Erfassen jeweils des vordersten Rahmens kann ein Nocken, Stößel, insbesondere ein druckmittelbetriebener Stößel od.dgl. vorgesehen sein.

Besonders günstig für die Weitergabe der vereinzelten an weiterführende Transportelemente oder Bearbeitungsstationen ist es, wenn an jedem Tragholm, vorzugsweise bei einem Hohlprofil aufgebildeten Tragholm in dessen Innerem, ein insbesondere druckmittelbetriebener Stößel od. dgl. zur Beaufschlagung des Hebels vorgesehen ist. Dadurch wird die "aktive" Übergabe durch die Vorrichtung selbst verbessert, weil nun die Betätigung des zur Vereinzelung dienenden Hebels nicht mehr von einem Stößel od.dgl. abhängig ist, der andernfalls auch an dem weiterführenden Transportmittel angeordnet sein könnte.

Dabei kann der Stößel etwa in Orientierungsrichtung des Tragholmes bewegbar sein und an seinem freien Ende vorzugsweise eine den Hebel untergreifende Schräge od.dgl. Führungsfläche zum Anheben des Hebels haben. Die von dem Stößel und dessen Führungskörper mit der Schrägfläche beaufschlagte, vorzugsweise die Unterseite, des Hebels kann ebenfalls abgeschrägt sein und in ihrer Schrägung der der Führungfläche entsprechen. Dies stelle eine besonders einfache Möglichkeit dar, die Längsbewegung eines Stößels in eine Aufwärts-Schwenkbewegung des Hebels umzusetzen, ohne aufwendige Zwischenglieder zu benötigen.

Um ein gutes Gleiten und Nachrutschen der Rahmen auf den etwas schräggestellten Tragholmen zu erleichtern, ist es vorteilhaft, wenn auf der Oberseite der Tragholme in deren Längsrichtung wenigstens eine glatte, blanke, im Querschnitt vorzugsweise ballige Gleitbahn für die Rahmen angeordnet ist. Die Kombination dieser balligen und somit wenig Berührung mit den Rahmen verursachenden Gleitbahnen mit der Schrägstellung ergibt ein problemloses Nachrutschen, so daß kein spezielles mechanisches Fördermittel erforderlich ist.

Die Betätigung des Hebels zum Anheben eines Rahmens kann gegen eine Rückstellkraft, vorzugsweise gegen eine Rückstellfeder erfolgen. Dadurch wird die Rückverstellung des Hebels nach der Vereinzelung in die Ausgangslage vereinfacht.

Es wurde bereits erwähnt, daß die Tragholme in Obenstellung für das Nachrücken der einzelnen Rahmen zu ihrer Vereinzelungsvorrichtung schrägstehen sollen. Zum Abkippen der Tragholme in deren Obenstellung kann die Führung für das Fahrgestell der Führungsholme in ihrem oberen Endbereich eine entsprechend schräge Abweichung haben. Dies stellt eine besonders einfache Lösung dafür dar, die Tragholme in der obersten Position schräg zu stellen, während, sie in allen übrigen Positionen horizontal bleiben sollen.

Eine besonders zweckmäßig gestaltete Abweichung der Führung für das Fahrgestell kann dabei dadurch gebildet sein, daß die Führungsstangen für das Fahrgestell vorzugsweise in ihrer Höhe und/oder bezüglich ihrer Neigung verstellbare Auflaufschrägen als Kippvorrichtung tragen und daß die die Führungsrollen für die Holme aufweisende Platte gegen eine Rückstellkraft, vorzugsweise gegen Federkraft, gegenüber dem die Führungsrollen aufweisende Schlitten schwenkbar ist und einen mit der Auflaufschräge zusammenwirkenden, an ihr starr angreifenden Auslenkungsvorsprung hat, der gegebenenfalls eine mit der Schräge zusammenwirkende Rolle tragen kann. Gelangt das Fahrgestell bei der Aufwärtsbewegung mit dem Auslenkungsvorsprung in den Bereich der Auflaufschräge, wird die die Holme tragende Platte gegen die Rückstellkraft verschwenkt und gekippt, um die gewünschte Schrägstellung zu erreichen. Somit wird die Kippbewegung praktisch selbsttätig durch den letzten Teil der Aufwärtsbewegung durchgeüfhrt.

Dabei können der Auslenkungsvorsprung und die Schwenkachse für die Platte seitlich ihrer Mitte angeordnet sein und an einem Hebelarm an der Platte können Zugfedern zur Erzeugung der Rückstellkraft angreifen, die mit ihren entgegengesetzten Enden an dem an der Führungsstange verfahrbaren Schlitten befestigt sind.

Es sei noch erwähnt, daß die Führungsstangen an ihrem unteren Ende für ihre stationäre Installierung Standfüße haben können, die gegebenenfalls an ihrer Standfläche verankerbar sind. Für eine variable Anwendung kann an diesen Standfüßen aber auch das schon erwähnte Fahrgestell vorzugsweise lösbar befestigt sein. Die Standfüße können an den Führungsstangen parallel zu den Tragholmen und insbesondere in der Richtung der Tragholme gegenüber den Führungsstangen vorstehen, in der sich die Tragholme mit angehängten Rahmen befinden. Auf diese Weise können die vom Gewicht der Rahmen ausgehenden Kräfte besonders gut von den Standfüßen aufgenommen werden.

Der oder die Förderwagen passen zweckmäßigerweise mit ihrem Fahrgestell und vorzugsweise einer Aufnahme oder einer Abstellfläche zwischen die Standfüße der Führungsstangen unterhalb der Tragholme. Somit kann jeweils ein solcher Förderwagen unterhalb der Tragholme zwischen die Standfüße eingefahren werden und die gesamte Vorrichtung komplettieren bzw. vor allem die Übergabe der auf dem Förderwagen befindlichen Rahmen zu den Holmen erleichtern.

Dabei ist es für ein problemloses Abstellen auf einem Förderwagen einerseits und eine einfache Übernahme durch die Tragholme andererseits vorteilhaft, wenn die Abstellfläche des Förderwagens zumindest an zwei einander gegenüberliegenden, beim Einfahren unter die Tragholme quer zu deren Verlauf angeordneten Seitenrändern, Seitenbegrenzungen und Abstützungen zum Anlehnen der abgestellten Rahmen aufweist. Dies ergibt nicht nur einen konstruktiv sehr einfachen Wagen, der außerdem sehr leicht bestückt und gehandhabt werden kann, sondern die Rahmen können schon in der Weise aufgestellt und abgestützt werden, daß die Tragholme nur noch in die Rahmenöffnung eingefahren werden müssen, um sie dann anheben zu können.

Dabei ist vorteilhaft, wenn als Seitenbegrenzungen des Förderwagens jeweils Rungen mit zwischen ihnen befindlichen Zwischenräumen vorgesehen sind, wobei die Zwischenräume in seitlicher Richtung größer als die entsprechende Abmessung der Tragholme sind. Somit können die Tragholme problemlos zwischen diesen Rungen in die Rahmenöffnungen eintreten und nach oben ausgehoben werden.

Um auch relativ hohe Rahmen auf dem Förderwagen abstützen zu können, ohne die Rungen entsprechend hoch machen zu müssen, kann eine Weiterbildung darin bestehen, daß die rungenartigen Seitenbegrenzungen der Abstellfläche der Vorrichtung und/oder des Förderwagens wenigstens eine ihre Zwischenräume überbrückende Querstange od.dgl. tragen, die auf einem Auflager an den Rungen aufliegt und vorzugsweise in vertikaler Anheberichtung unbefestigt ist. Sie kann dann zwar nach der Seite hin die angelehnten Rahmen abstützen, nach dem Einfahren der Tragholme aber problemlos nach oben abgehoben werden, um das Anheben der Rahmen nicht zu behindern.

Eine Verbesserung zur Zuverlässigkeit der Vereinzelung auch nach sehr vielen Betriebsstunden oder bei hintereinanderhängenden Rahmen sehr unterschiedlicher Amessungen kann erreicht werden, wenn für den Parallelvorschub der an den Holmen hängenden Rahmen eine das Rahmenpaket hintergreifende Querstange und Parallelführungen für diese Querstange vorgesehen sind, welche Parallelführungen in einem Abstand oberhalb der oberen Rahmenschenkel verlaufen, der kleiner als die Dicke dieser Rahmen - von der Rahmeninnenseite zur Rahmenaußenseite - ist. Dadurch wird einerseits sichergestellt, daß das Rahmenpaket und die anhängenden Rahmenschenkel ihrer Vereinzelung parallel zugeführt werden, sich also nicht zwischen ihren Aufhängepunkten schrägstellen können, und daß auch ein Überklettern eines kleineren vorderen Rahmens durch einen dahinter befindlichen größeren Rahmen vermieden wird, weil die Parallelführungen durch ihre Anordnung unmittelbar oberhalb der Rahmen dies verhindern.

Dabei ist es vorteilhaft, wenn die Führungen für die Querstange insbesondere bei abgesenkten Holmen nach oben hochgeschwenkt oder hochschwenkbar sind. In hochgeschwenkter Position der Führungen können somit die Rahmen bequem von den abgesenkten Holmen aufgenommen werden, wie es vorstehend beschrieben wurde.

Die Querstange für die Vorschubbewegung der Rahmen kann mit den Holmen schrägstellbar und durch Schwerkraft und/oder Motorkraft verschiebbar sein. Somit ist der Vorschub der einzelnen Rahmen bei ihrer Zufuhr zu der Vereinzelungsvorrichtung nicht mehr ausschließlich von ihrem Eigengewicht abhängig. Entsprechend zuverlässig gelangen die Rahmen zu der Vereinzelungsvorrichtung.

Eine abgewandelte Ausführungsform kann darin bestehen, daß für einen motorischen Parallelvorschub der Rahmen an den Holmen an diesen Endlosbänder vorgesehen sind, auf deren Oberseite die Rahmen - mit ihrem oberen Rahmenschenkel - aufliegen oder die gegebenenfalls Mitnehmer zum Hintergreifen insbesondere des in Vorschubrichtung letzten Rahmens haben, wobei diese Endlosbänder der Tragholme synchron angetrieben sind. Bei einer solchen Ausführungsform kann unter Umständen sogar auf die Schrägstellung der Tragholme für die Vereinzelung verzichtet werden.

Vor allem bei Kombination einzelner oder mehrerer der vorbeschriebenen Merkmale und Maßnahmen ergeben sich in ihrem Aufbau einfache und gut zu handhabende Vorrichtungen, mit denen Abstandhalterrahmen nach ihrer Herstellung gespeichert und vor allem an eine weiterverarbeitende Maschine weitergegeben werden können, wobei diese Übergabe ebenfalls in sehr einfacher Weise erfolgen kann. Dabei kann je nach Bedarf die gesamte Vorrichtung auch den Transport der Rahmen übernehmen oder sie kann teilweise stationär angeordnet sein, während ein ihr zugehöriger einfacher Förderwagen für den Transport herangezogen wird, wobei dann in vorteilhafter Weise mehrere Förderwagen den stationären Magazinteil bedienen können oder aber auch mehrere an verschiedenen Weiterbearbeitungsstationen beispielsweise für unterschiedliche Rahmengrößen angeordnete Magazinteile jeweils mit den Förderwagen bedient werden können, so daß die Anzahl der Magazinteile und der Förderwagen nicht übereinstimmen muß.

Nachstehend ist die Erfindung mit ihren ihr als wesentlich zugehörenden Einzelheiten anhand der Zeichnung in einem Ausführungsbeispiel noch näher beschrieben.

Es zeigt in zum Teil schematisierter Darstellung:

Fig. 1 eine Ansicht der Vorrichtung mit Blick auf die eingestellten Rahmen und auf die Stirnseite der rechenartig nebeneinander angeordneten Tragholme,

Fig. 2 eine gegenüber Fig. 1 um 90° gedrehte Ansicht der Vorrichtung mit den vier möglichen Verschiebepositionen der Tragholme und insbesondere der schrägen Anordnung der Tragholme in Obenstellung mit daran hängenden Rahmen, wobei auch die Abnahme eines vereinzelten Rahmens angedeutet ist,

Fig. 3 eine Draufsicht der erfindungsgemäßen Vorrichtung,

Fig. 4 eine Draufsicht des Fahrgestelles für die Führung der Tragholme sowohl in horizontaler Richtung als auch für ihre Auf- und Abwärtsbewegung an einer im Querschnitt C-förmigen Führungssäule oder -stange,

Fig. 4a eine Draufsicht eines abgewandelten Fahrgestelles für die Führung der Tragholme, welches in einer U-förmigen Führungssäule geführt ist,

Fig. 5 eine Seitenansicht des Fahrgestelles gemäß Fig. 4 oder 4a.

Fig. 6 in vergrößertem Maßstab das vordere Ende eines Tragholmes mit einem Anschlag und einer Vereinzelungsvorrichtung für die Übergabe eines Rahmens an eine weiterverarbeitende Vorrichtung,

Fig. 7 eine der Fig. 6 entsprechende Darstellung, bei welcher ein Rahmen vereinzelt und der nächste zwar schon angehoben, aber von der Vereinzelungsvorrichtung noch festgehalten ist,

Fig. 7a eine abgewandelte Ausführungsform einer Vereinzelungsvorrichtung analog der der Figuren 6 und 7, wobei statt eines Schwenkhebels ein einarmiger Hebel vorgesehen ist und das Ende des Holmes einen Vorsprung zum Aufnehmen eines vereinzelten Rahmens hat,

Fig. 8 eine Stirnansicht der Vereinzelungsvorrichtung gemäß den Figuren 6, 7 und 7a mit einem gerade über das Niveau der festen Anschläge gehobenen Rahmen,

Fig. 9 eine Seitenansicht einer Führungsstange mit einer Teilausstanzung der vertikalen Führungsbahn im oberen Endbereich für die Kipposition der Tragholme in der oberen Position,

Fig. 10 eine Draufsicht einer abgewandelten Vorrichtung, bei welcher die Führungsstangen mit den Tragholmen als stationäres Magazin ausgestaltet sind, während die Abstellfläche auf einem zu dem Magazin gehörenden, unabhängig davon bewegbaren Förderwagen angeordnet sind,

Fig. 11 eine Seitenansicht einer Führungsstange im oberen Bereich mit einer verstellbaren Auflaufschräge als Kippvorrichtung für die Tragholme,

Fig. 12 eine Seitenansicht des der Vereinzelungsvorrichtung abgewandten Endbereiches eines Tragholmes mit der Kippvorrichtung und mit einer die Rahmen am gegenseitigen Überklettern hindernden Führung für eine parallele Vorschubvorrichtung,

Fig. 13 eine Teilansicht der Tragholme von vorne gemäß Fig. 12,

Fig. 14 eine Seitenansicht einer abgewandelten Ausführungsform eines Tragholmes mit einem Endlosband für den Vorschub der Rahmen sowie

Fig. 15 eine Teil-Draufsicht der Tragholme mit Endlosbändern gemäß Fig. 14.

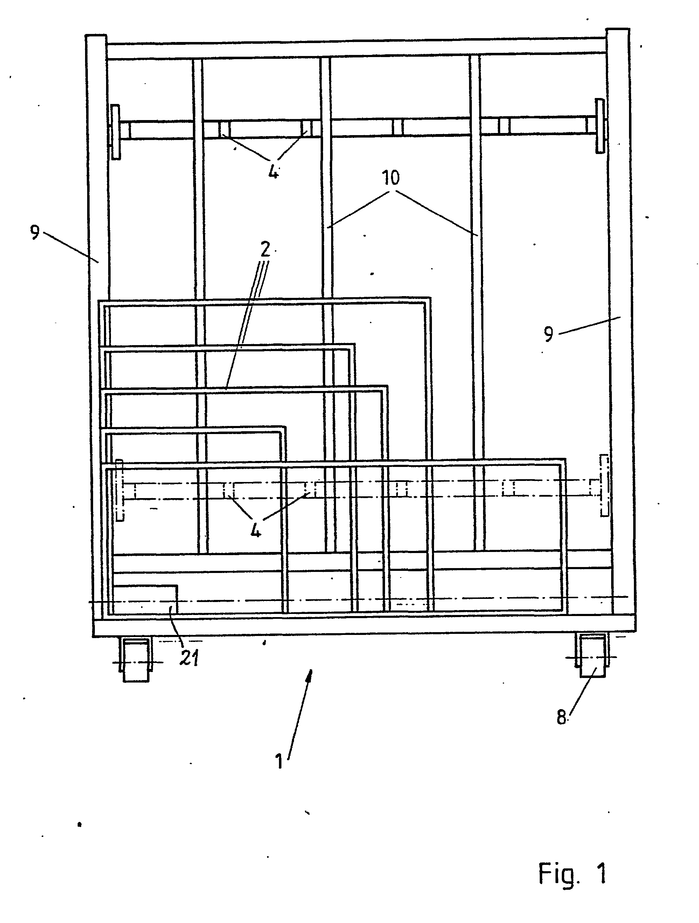

Eine im ganzen mit 1 bezeichnete, vor allem in den Figuren 1 bis 3 dargestellte Vorrichtung dient zum Speichern und Transportieren von Abstandhalter-Rahmen 2, im folgenden auch kurz Rahmen 2 genannt, die den Abstand zwischen Einzelscheiben von Isolierglasscheiben fixieren und mittels Dichtungsmasse mit den Einzelscheiben von Isolierglasscheiben zusammengebaut werden sollen. Nach der Fertigung solcher Rahmen 2 müssen diese also zu der Fertigung der eigentlichen Isolierglasscheiben gebracht werden. Um dabei die Fertigung der Rahmen und die der Isolierglasscheiben weitgehend unabhängig voneinander zu machen bzw. die Fertigung der Isolierglasscheiben nicht unterbrechen zu müssen, wenn nicht genügend Rahmen 2 vorliegen oder aber die Fertigung der Rahmen 2 fortsetzen zu können, selbst wenn zunächst keine Rahmen für Isolierglasscheiben benötigt werden, ist die Vorrichtung 1 als Speicher vorteilhaft. Ferner kann sie die räumliche Entfernung von einer Rahmenbiegevorrichtung oder einer sonstigen Fertigungsvorrichtung für Rahmen 2 zu der Isolierglasscheiben-Fertigung auf einfache Weise überbrücken.

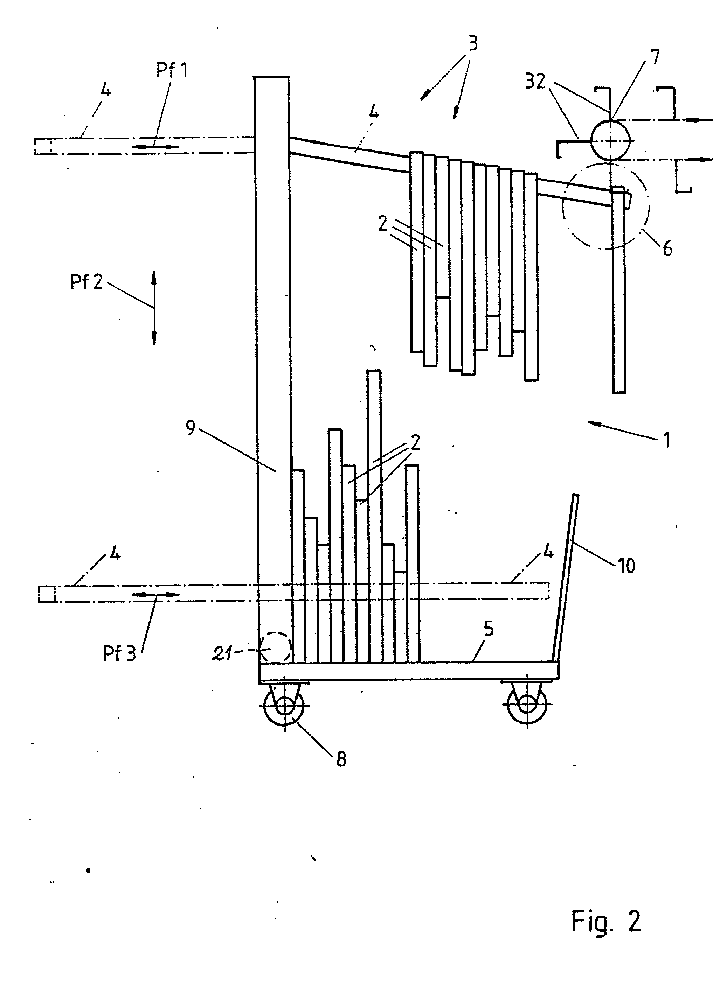

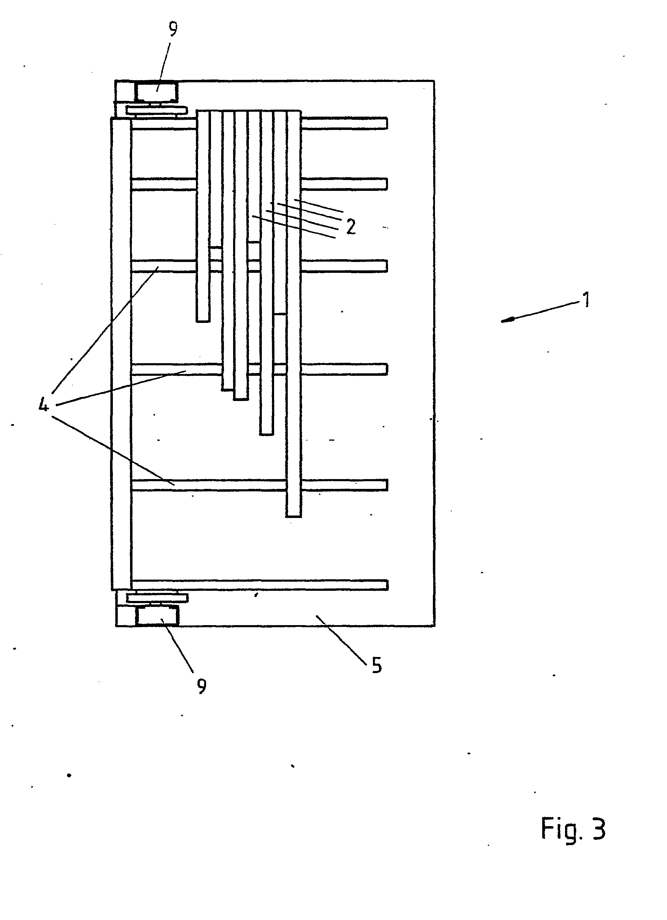

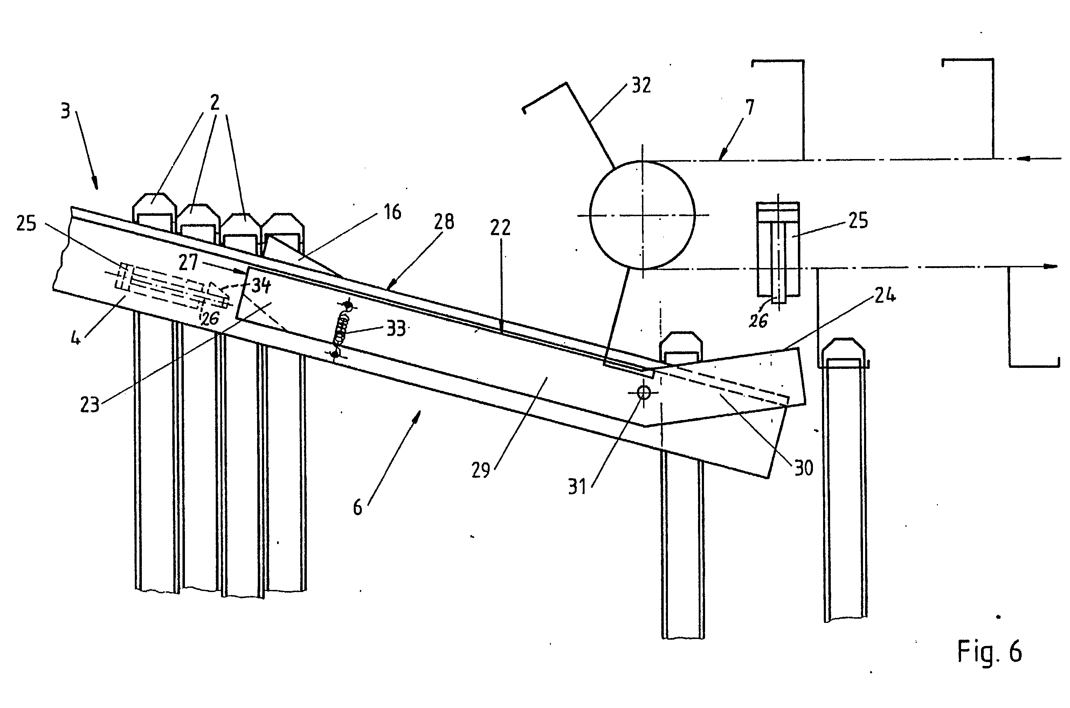

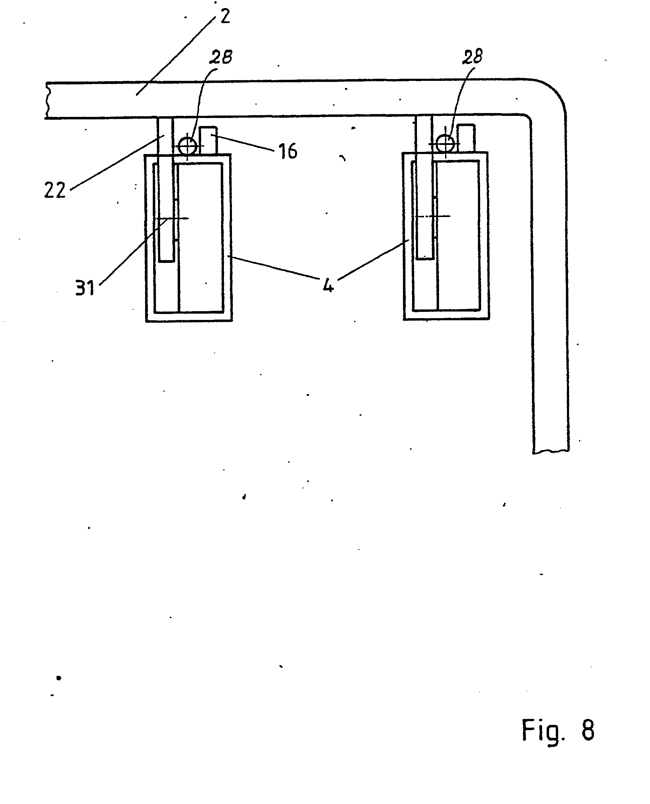

Die Vorrichtung 1 hat gemäß den Figuren 1 bis 3 eine auf- und abverstellbare Aufhängevorrichtung 3 für die Rahmen, die vor allem wenigstens zwei, gemäß Fig. 1 sogar sechs oder gemäß Fig. 3 fünf beabstandete Tragholme 4 od.dgl. auf gleicher Höhe aufweist. Sie hat ferner unterhalb der Aufhängevorrichtung 3 und den Tragholmen 4 eine Abstellfläche 5 od.dgl. für die fertiggestellten Rahmen 2, über welcher die Tragholme 4 gemäß Fig. 1 etwa horizontal vorstehen. Gemäß Fig. 2 sind die Tragholme 4 gegen- über der Abstellfläche 5 in ihrer Längsstreckungsrichtung rückziehbar, was bei der Obenposition der Tragholme 4 strichpunktiert angedeutet ist. Ferner sind sie gemäß dem vertikalen Doppelpfeil insbesondere in dieser rückgezogenen Position absenkbar und auf der Höhe des von den abgestellten Rahmen 2 umgrenzten freien Raumes wieder vorschiebbar und danach mit den Rahmen 2 anhebbar. Dabei hat die Aufhängevorrichtung 3 außerdem eine vor allem in den Fig. 6 bis 8 noch näher dargestellte und im folgenden genauer beschriebene Vereinzelungsvorrichtung 6 für die von ihr getragenen Rahmen 2.

Nach der Fertigung können also die Rahmen 2, wie in den Fig. 1 bis 3 dargestellt, auf der Abstellfläche 5 der Vorrichtung 1 karteikartenartig hintereinandergestellt werden, wobei Rahmen unterschiedlicher Größe aufeinander folgen können, aber bei einer Serienfertigung natürlich auch lauter gleich große Rahmen zwischengelagert werden können.

Für die Weiterleitung an einer Übergabevorrichtung 7 (vgl. Fig. 2 u. 6) können diese abgestellten Rahmen nun von den Tragholmen 4 erfaßt und hochgehoben werden. Sind die Tragholme dabei in Ausgangsstellung zunächst in einer oberen Position über der Abstellfläche 5, können sie gemäß dem oberen horizontalen Doppelpfeil Pf 1 zurückgezogen, dann gemäß dem vertikalen Doppelpfeil Pf 2 abgesenkt und nun gemäß dem dritten Doppelpfeil Pf 3 wieder etwa horizontal vorgeschoben werden, wodurch sie in die Innenöffnungen der abgestellten Rahmen 2 gelangen. Danach können sie wiederum gemäß dem Doppelpfeil Pf 2 wieder angehoben werden, wonach sie sich in der in Fig. 2 dargestellten aufgehängten Obenposition befinden. Die dabei erkennbare Schrägstellung der Tragholme 4 in Obenposition wird im folgenden noch erläutert werden und dient dazu, die Rahmen 2 der Vereinzelungsvorrichtung 6 und der Übergabevorrichtung 7 auf möglichst einfache Weise zuzuführen.

Im Ausführungsbeispiel hat die Vorrichtung 1 ein Fahrgestell mit Rädern 8. Sie könnte aber auch von einem Gabelstapler oder einem sonstigen Fördermittel transportiert werden.

Die schon erwähnte Aufhängevorrichtung 3, welche vor allem von den Tragholmen 4 gebildet wird, ist im Ausführungsbeispiel an zwei parallelen und vertikalen Führungsstangen 9 sowohl hin- und herals auch auf- und abwärtsbewegbar gelagert. Denkbar wäre allerdings auch eine Lagerung nur an einer Führungstange 9 oder erforderlichenfalls auch an mehr als zwei Führungsstangen 9. Dabei sind die Führungsstangen 9 im Ausführungsbeispiel gemäß Fig. 3 an einem Rand der Abstellfläche 5 angeordnet, während am gegenüberliegenden Rand dieser Abstellfläche 5 diese begrenzende Rungen 10 od.dgl. Abstützungen vorgesehen sind, die dabei lösbar befestigt sein können, um vor allem den gemäß dem Pfeil Pf 3 in die Rahmen 2 einzuschiebenden Tragholmen 4 ausweichen zu können. Die Rahmen 2 können also zwischen den Führungssäulen 9 und den Rungen 10 karteikartenartig aufgestellt und hintereinander gestapelt werden.

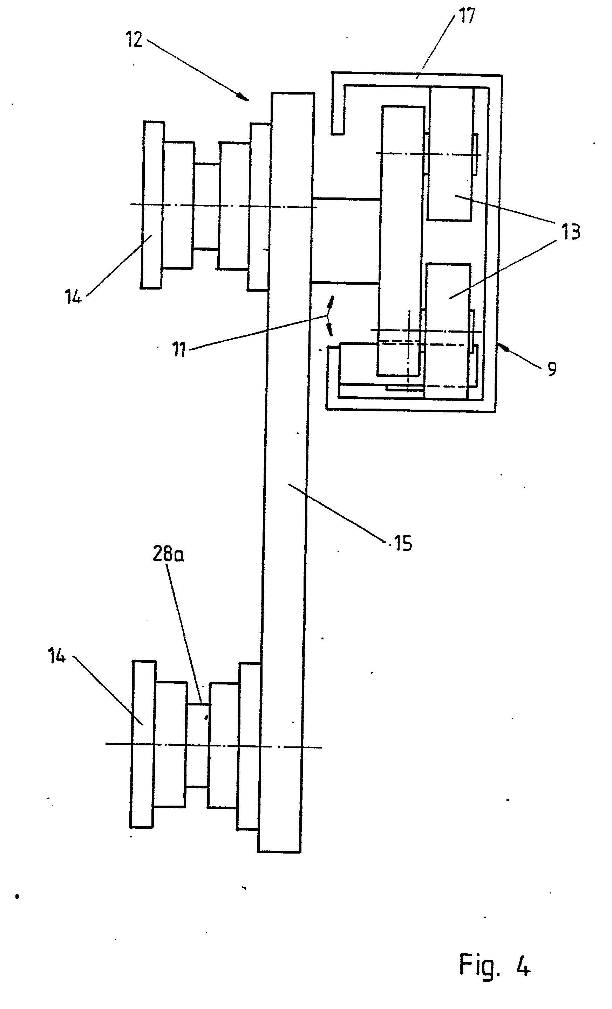

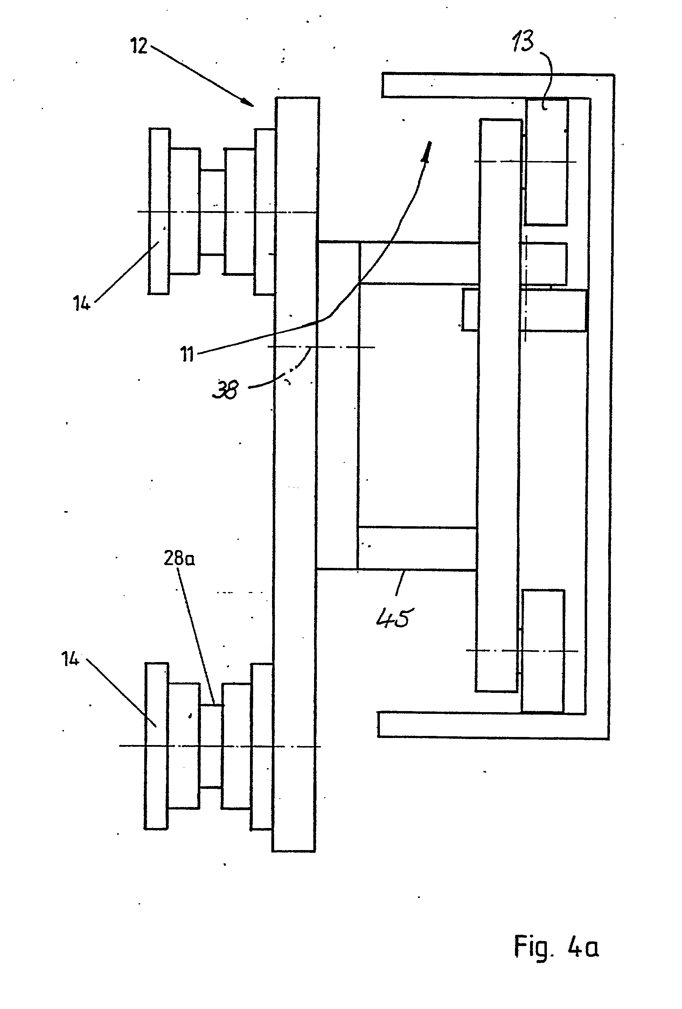

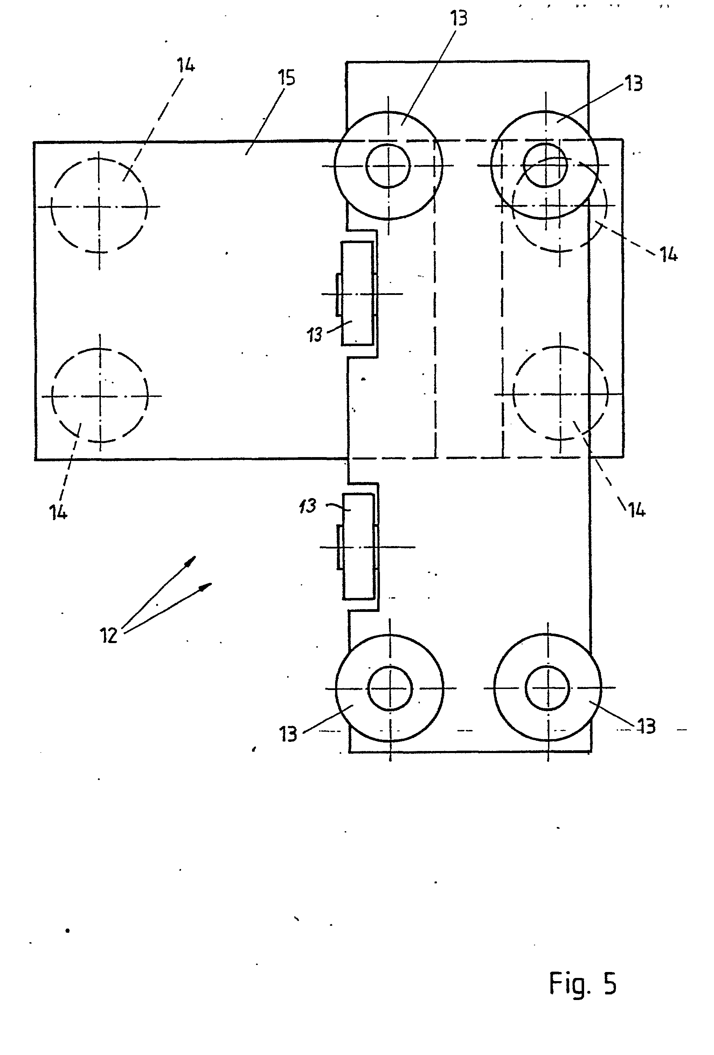

Gemäß Fig. 4 sind die vertikalen Führungsstangen 9 im Querschnitt hohl und einseitig offen, nämlich C-förmig ausgebildet. Dabei sind die Öffnungen 11 dieser C-Profile einander zugewandt. Die Aufhängevorrichtung 3 hat nun für jede Führungsstange 9 ein im ganzen mit 12 bezeichnetes Fahrgestell, welches in den Fig. 4 und 5 näher dargestellt ist und für die geführte Auf- und Abwärtsbewegung in das Innere des C-Profiles eingreifende Rollen 13 hat, gem. Fig. 5 insgesamt vier derartige Rollen für die unterschiedlichen Belastungen durch die verschiedenen Positionen der Tragholme 4 einmal auf der einen und zum anderen auf der anderen Seite dieser Führungsstangen 9. Dabei greifen außerdem an parallelen horizontalen Führungsstangen oder den Tragholmen 4 selbst der Aufhängevorrichtung 3 aussenseitig weitere Rollen 14 für die horizontale Verschiebbarkeit an.

Für diese horizontale Verschiebung der Tragholme 4 sind dabei gemäß Fig. 5 an dem Fahrgestell 12 je zwei die Tragholme 4 oder deren Führung von oben und je zwei sie von unten beaufschlagende derartige Rollen 14 vorgesehen. Diese vier Führungsrollen 14 eines Fahrgestelles 12 sind an einer Platte 15 gelagert, die gegenüber der der Abstellfläche 5 zugewandten Seiten der Führungsstangen 9 zurückversetzt ist oder bündig damit abschließt und vorzugsweise nach der anderen Seite der Führungsstange 9 übersteht. Diese asymmetrische Anordnung der Platte 15 mit den Führungsrollen 14 ist besonders deutlich in Fig. 5 zu erkennen, wenn man bedenkt, daß die dort ebenfalls dargestellten Führungsrollen 13 für die Vertikalverstellung die Position der Führungsstange 9 verdeutlichen. Es ergibt sich somit ein genügend großer horizontaler Abstand der Führungsrollen 14, um die von den Tragholmen 4 erzeugten Momente sicher aufnehmen zu können. Dennoch können die Tragholme 4 mit ihren vorderen Enden und der dort angeordneten Vereinzelungsvorrichtung 6 bis in den Umriß zwischen den beiden Führungsstangen 9 zurückgezogen und in dieser Position ohne Gefahr für die auf der Abstellfläche 5 befindlichen Rahmen 2 abgesenkt werden.

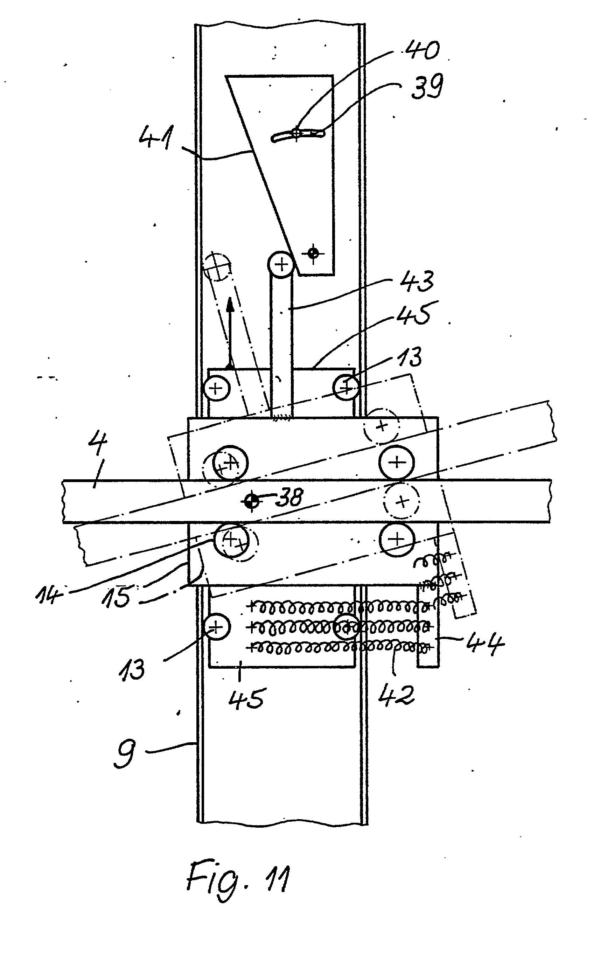

In Fig. 4a ist eine etwas abgewandelte Ausführungsform des dennoch im ganzen mit 12 bezeichneten Fahrgestelles dargestellt. Auch dabei ist die Führungsstange hohl und einseitig offen, aber U-förmig ausgebildet und das Fahrgestell 12 greift mit Rollen 13 von innen an den Schenkeln 17 der Führungsstange 9 an. Das Austreten der Rollen 13 aus der Öffnung 11 der Führungsstange 9 wird dabei dadurch verhindert, daß die zweite Führungsstange 9 spiegelsymmetrisch zu der ersten angeordnet ist und zwischen beiden Fahrgestellen in nicht näher dargestellter Weise ein starrer Abstandhalter für einen gleichbleibenden festen Abstand sorgt. Dabei ist noch angedeutet, daß die Platte 15 gegenüber dem eigentlichen Fahrteil mit den Rollen 13 um eine horizontale, anhand der Fig. 11 noch zu erläuternde Achse 38 schwenk- oder kippbar ist, um die schon in Fig. 2 erkennbare Schrägstellung der Tragholme 4 in ihrer Obenposition zu ermöglichen.

Es wurde bereits erwähnt, daß die vertikalen Führungsstangen 9 und die Führungsvorrichtung für die Aufhängevorrichtung 3 derart ausgebildet sind, daß in der obersten Position der Aufhängevorrichtung 3 die Tragholme 4 gemäß Fig. 2 und auch gemäß den Figuren 6 u. 7 mit ihrem freien Ende soweit schräg nach unten kippbar sind, daß die angehängten Rahmen 2 aufgrund der Schwerkraft selbsttätig gegen dieses Ende hin gleiten, wo ein Anschlag 16 für diese Rahmen 2 an dem jeweiligen Tragholm 4 vorgesehen ist und nach oben hochsteht (vgl. vor allem Fig. 6 bis 8). Dabei sind die Tragholme 4 um etwa 10° bis 20° gegenüber einer Horizontalen kippbar.

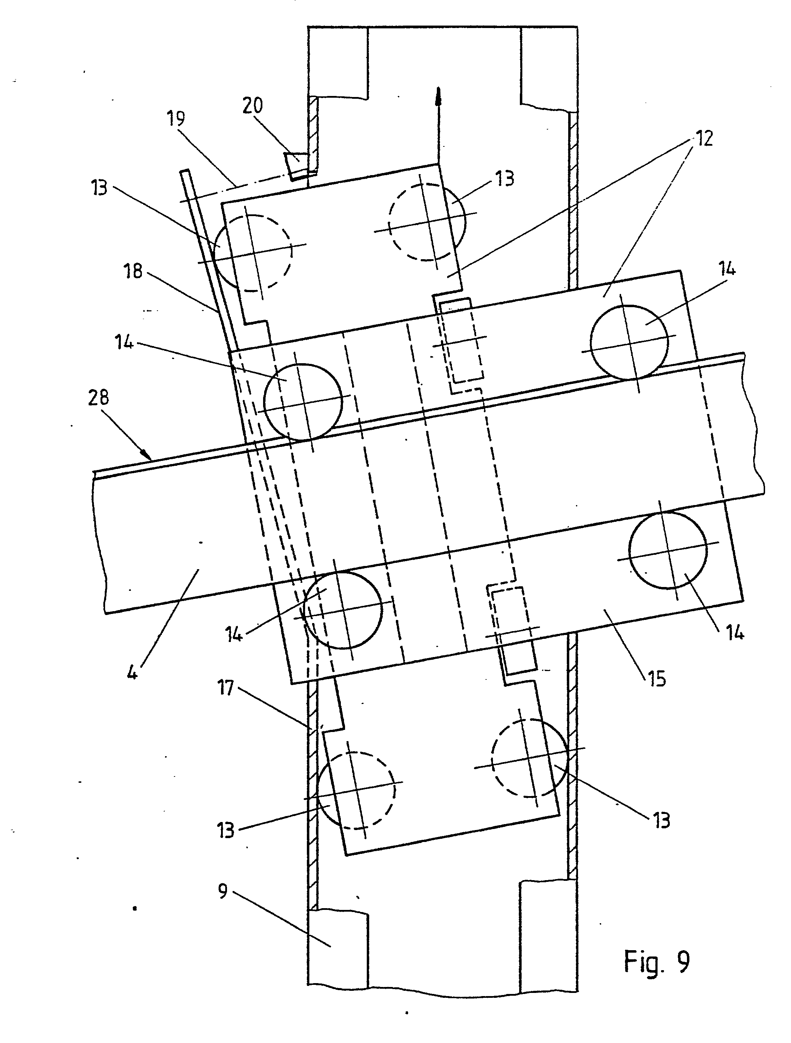

Fig. 9 zeigt eine mögliche Lösung, wie dieses Abkippen der Tragholme 4 in deren Obenstellung selbsttätig erreicht wird. Dazu ist nämlich vorgesehen, daß die Führung für das Fahrgestell 12 der Führungssäulen oder Stangen 9 in ihrem oberen Endbereich eine entsprechend schräge Abweichung hat. Als Abweichung der Führung hat dabei jedes C-Profil der Führungsstange 9 an den den aufgehängten Rahmen 2 zugewandten Schenkeln 17 eine Teilausstanzung 18, die ggfs. noch verstärkt sein kann und der Kippschräge der Tragholme 4 gemäß schräg von unten nach oben nach außen verläuft. In Fig. 9 wird deutlich, wie in diesem Bereich der Teilausstanzung 18 das gesamte Fahrgestell 12 und damit auch der damit verbundene Tragholm 4 gekippt werden, weil die Rollen 13 dieser nach vorne ausgeklappten Teilausstanzung 18 folgen, was zwangsweise aufgrund des Gewichtes des Tragholmes 4 mit den Rahmen 2 geschieht.

Zur Justierung der Kippschräge ist dabei am oberen freien Schenkel der Teilausstanzung eine an der Führungsstange 9 angreifende Stellschraube 19 vorgesehen. Damit kann also die ganz genaue Schrägstellung des Teiles 18 für die Kippbewegung der Tragholme 4 nach Fertigstellung der Vorrichtung 1 eingestellt und ggfs. im späteren Betrieb auch noch nachgestellt werden.

Am oberen Rand der durch die Teilausstanzung 18 gebildeten Öffnung ist in der Führungsstange ein Anschlag 20 für das Fahrgestell 12 vorgesehen. Je nach Art des Antriebes, vor allem der Hubbewegung, der Aufhängevorrichtung 3 könnte hier ggfs. auch noch ein Endschalter vorgesehen sein.

Für eine allmähliche Kippbewegung ist der ausgebogene Teil 18 der Führung von der Führungsstange 9 weg etwas gekrümmt.

Die Fahrgestelle 12 haben vorzugsweise gekuppelte Zugelemente, insbesondere Kettentriebe für ihre Auf- und Abwärtsbewegung.

In Fig. 2 ist ein entsprechender Antriebsmotor 21 für diese Kettentriebe angedeutet. Dabei kann für den Antrieb der Auf- und Abbewegung der Tragholme 4 ein Luftmotor 21, ggfs. auch ein vorzugsweise unter Strom anhaltbarer Elektromotor vorgesehen sein, der unter Antriebsenergie stehend die Tragholme 4 in ihrer Obenstellung am Anschlag 20 halten kann. Somit sind besondere mechanische Haltevorrichtungen, die denkbar wären, für die Obenstellung der Tragholme 4 entbehrlich.

Eine bevorzugte Lösung, wie das Abkippen der Tragholme 4 in deren Obenstellung selbsttätig erreicht wird, zeigt Fig. 11. Dabei erkennt man, daß die Führungsstangen 9 für das Fahrgestell 12 eine bezüglich ihrer Neigung über einen bogenförmigen Langschlitz 39 relativ zu einem Stift 40 verstellbare Auflaufschräge 41 als Kippvorrichtung im Inneren des U-Profiles ragen und daß die die Führungsrollen 14 aufweisende Platte 15 gegen die Rückstellkraft von Zugfedern 42 gegenüber dem die Führungsrollen 13 aufweisenden Schlitten oder Fahrgestell um die bereits erwähnte Achse 38 schwenkbar ist und einen mit der Auflaufschräge 41 zusammenwirkenden, an ihr starr angreifenden Auslenkungsvorsprung 43 hat. Der Auslenkungsvorsprung 43 und die Schwenkachse 38 für die Platte 15 sind dabei seitlich ihrer Mitte angeordnet, um einen genügend großen Angriffsabstand für die an einem Hebelarm 44 an der Platte 15 angreifenden Zugfedern 42 zu ergeben, die mit ihrem entgegengesetzten Ende an dem die Rollen 13 aufweisenden Schlitten 45 befestigt sind. In diesem Ausführungsbeispiel kann also die Führungsstange 9 auch in ihrem oberen Bereich unverformt bleiben.

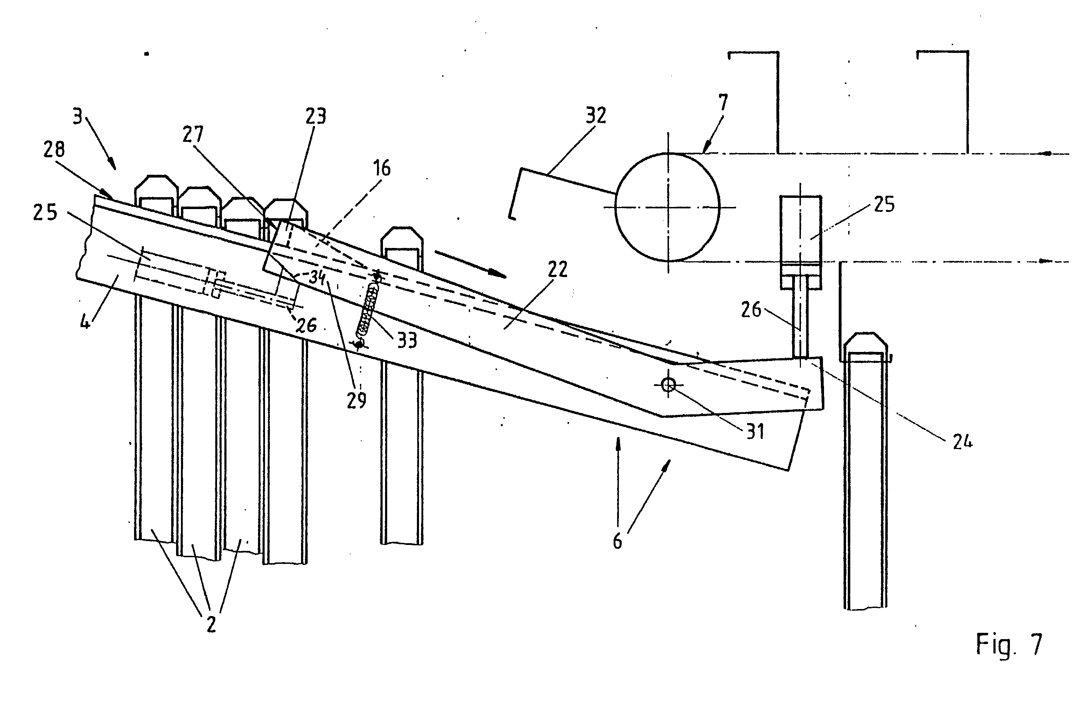

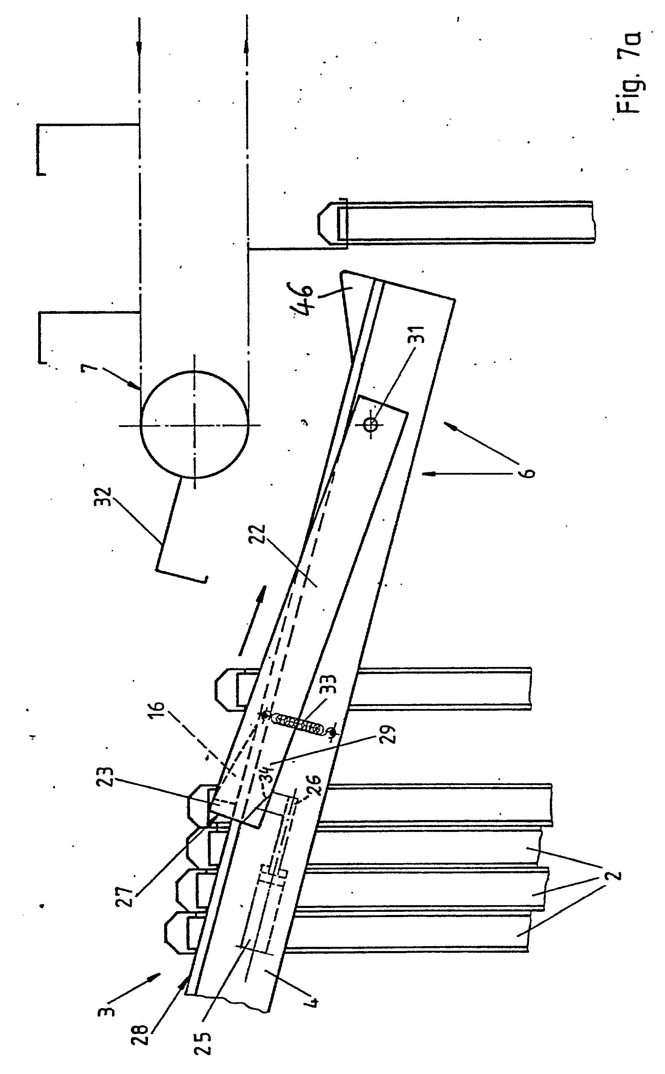

In den Figuren 6 bis 8 ist die Vereinzelungsvorrichtung 6 für die von den Tragholmen 4 angehobenen Rahmen 2 näher dargestellt, wobei Fig. 6 außerdem zeigt, wie ein vereinzelter Rahmen 2 von einer Übergabevorrichtung 7 erfaßt wird. Zur Vereinzelung der von der Aufhängevorrichtung 3 getragenen Rahmen 2 ist dabei vor allem im Bereich des Anschlages 16 für die Rahmen 2 an den Tragholmen 4 jeweils ein Kipphebel 22 schwenkbar gelagert, welcher mit einem Ende 23 jeweils den vordersten Rahmen 2 im Bereich des Anschlages 16 untergreift und - im Ausführungsbeispiel an seinem abgewandten Ende 24 - von einer Betätigungsvorrichtung 25 beaufschlagt ist, wobei der Schwenkweg des Hebels 22 im Bereich des Anschlages 16 wenigstens der Höhe dieses Anschlages 16 entspricht, damit der Hebel 22 einen Rahmen 2 aus der Anlageposition gegen den Anschlag 16 über diesen hinausheben kann, wie es in Fig. 7 u. 8 augedeutet ist. Gemäß Fig. 6 und 7 fällt dabei die der Anschlagfläche abgewandte Seite des Anschlages 16 schräg gegen die Oberseite des Holmes 4 hin ab, so daß der vereinzelte Rahmen 2 selbsttätig weiterleiten kann, bis er von der Übergabevorrichtung 7 erfaßt werden kann.

Zur Beaufschlagung des Schwenkhebels 22 zum Erfassen jeweils des vordersten Rahmens 2 können Nocken, ein Stößel 26, insbesondere ein druckmittelbetriebener Stößel od.dgl. vorgesehen sein.

Vor allem in Fig. 7 ist deutlich zu erkennen, daß der Anschlag 16 gegenüber der Stirnseite 27 des Hebels 22 zurückversetzt ist, so daß diese Stirnseite 27 ihrerseits so lange einen Anschlag für die verbleibenden Rahmen 2 bildet, wie der Hebel 22 mit einem vereinzelten Rahmen 2 in Anhebeposition gemäß Fig. 7 ist. Dadurch kann verhindert werden, daß die verbleibenden Rahmen schon während des Anhebens des zu vereinzelnden Rahmens 2 nachrutschen und den Vereinzelungsvorgang stören.

Bei dieser Gelegenheit sei erwähnt, daß auf der Oberseite der Tragholme 4 in deren Längsrichtung wenigstens eine blanke und ballige Gleitbahn 28 für die Rahmen 2 angeordnet ist, um deren Abwärtsgleiten auf dem schrägstehenden Holm 4 zu erleichtern und unabhängig von irgend welchen Antriebsmitteln zu machen. An den die Holme etwas umgreifenden Rollen 14 in Fig. 4 erkennt man eine dies berücksichtigende Rille 28a. Im Ausführungsbeispiel ist der Kipphebel 22 wippenartig ausgebildet und derart gebogen, daß zwei Hebelarme 29 und 30 beidseits der Lagerung 31 einen stumpfen Winkel miteinander einschließen, wobei der dem Anschlag 16 abgewandte Hebelarm 30 in Ausgangsstellung gem. Fig. 6 über den jeweiligen Tragholm 4 hochsteht und so einen Anschlag für den vereinzelten Rahmen 2 bildet und diesen vor einem völligen Abgleiten von dem schrägen Tragholm 4 bewahrt, falls dies aufgrund der Konstruktion der Übergabevorrichtung 7 zweckmäßig ist. Wären die Mitnahmehaken 32 der Übergabevorrichtung 7 entgegengesetzt geöffnet, könnten sie jeweils zur Aufnahme eines vereinzelten Rahmens 2 auch einfach an das Ende des Tragholmes 4 gebracht werden, wobei dann das Hochstehen des Hebelamres 30 entfallen würde, damit ein Rahmen 2 unmittelbar von dem Holmende auf einen solchen Haken gleiten könnte.

Damit die Rahmen 2 mit einem Rahmenschenkel horizontal hängen, sind für einen Rahmen 2 jeweils wenigstens zwei parallele Tragholme 4 mit je einem Anschlag 16 und je einem Hebel 22 zur Vereinzelung vorgesehen. Die Betätigung des Hebels 22 zum Anheben eines Rahmens 2 erfolgt dabei zweckmäßigerweise gegen eine Rückstellkraft, im Ausführungsbeispiel gegen eine Rückstellfeder 33. Nach dem Rückziehen des Stößels 26 nimmt also der Hebel 22 selbsttätig seine Ausgangslage ein, wobei er mit seiner Stirnseite 27 aus dem Bereich der Rahmen 2 zurückverschwenkt wird, so daß diese bis zum Anschlag 16 nachrutschen können. Der Überstand der Stirnseite 27 gegenüber dem Anschlag 16 ist dabei geringer als eine Rahmenbreite, so daß sichergestellt ist, daß der Hebel nur in den vordersten, am Anschlag 16 anliegenden Rahmen eingreift und diesen beim nächsten Arbeitstakt alleine anheben kann.

In den Figuren 6 und 7 ist noch angedeutet, daß statt des Stößels 26 mit dem Arbeitszylinder 25 der Förder- oder Abnahmevorrichtung 7 oder auch zusätzlich dazu an jedem Tragholm 4 - bei einem als Hohlprofil ausgebildeten Tragholm 4 zweckmäßigerweise in dessen Innerem, ein insbesondere ebenfalls druckmittbetriebener Stößel 26 zur Beaufschlagung des Schwenkhebels 22 vorgesehen sein kann. Auch dabei ist ein Arbeitszylinder 25 vorgesehen. Der Stößel 26 ist in diesem Falle in Orientierungsrichtung des Tragholme 4 bewegbar, wie es der Vergleich der Figuren 6 u. 7 verdeutlicht. Er hat an seinem freien Ende eine den Schwenkhebel 22 an dessen anhebbarem Hebelarm 29 untergreifende Schräge oder Führungsfläche 34 zum Anheben des Schwenkhebels 22 bzw. des Armes 29. Dabei ist in Fig. 6 u. 7 gestrichelt angedeutet, daß in diesem Falle die von dem Stößel 26 und dessen Führungskörper mit der Schrägfläche 34 beaufschlagte Seite, im Ausführungsbeispiel die Unterseite des Schwenkhebels 22 in diesem Angriffsbereich ebenfalls abgeschrägt ist und in ihrer Schrägung der der Führungsfläche 34 entspricht. Wird dieser Sößel 26 mit dem Führungskörper aus der in Fig. 7 dargestellten Position wieder in die Ausgangslage gem. Fig. 6 zurückgezogen, wird auch der Hebel 22 durch sein Eigengewicht und insbesondere die Rückstellfeder 33 in Ausgangslage gebracht.

Eine besonders günstige und bevorzugte Ausführungsform der Vereinzelungsvorrichtung 6 zeigt Fig. 7a. Der Hebel 22 ist dabei als einseitiger Hebel ausgebildet, der in gleicher Weise mit einem Stößel 26 und einem Vorsprung 16 zur Vereinzelung der Rahmen 2 zusammenwirkt, wie der Schwenkhebel nach Fig. 7. Somit haben übereinstimmende Teile auch dieselben Bezugsziffern.

Es fehlt jedoch das abgewinkelte Hebelende 30 und stattdessen hat der Holm 4 einen Auffangvorsprung 46, von welchem der jeweils vereinzelte Rahmen 2 mittels des Hakens 32 abgenommen werden kann. Somit kann der Vereinzelungshebel 22 völlig unbeeinflußt von einem evtl. auf ihm lastenden vereinzelten Rahmen arbeiten.

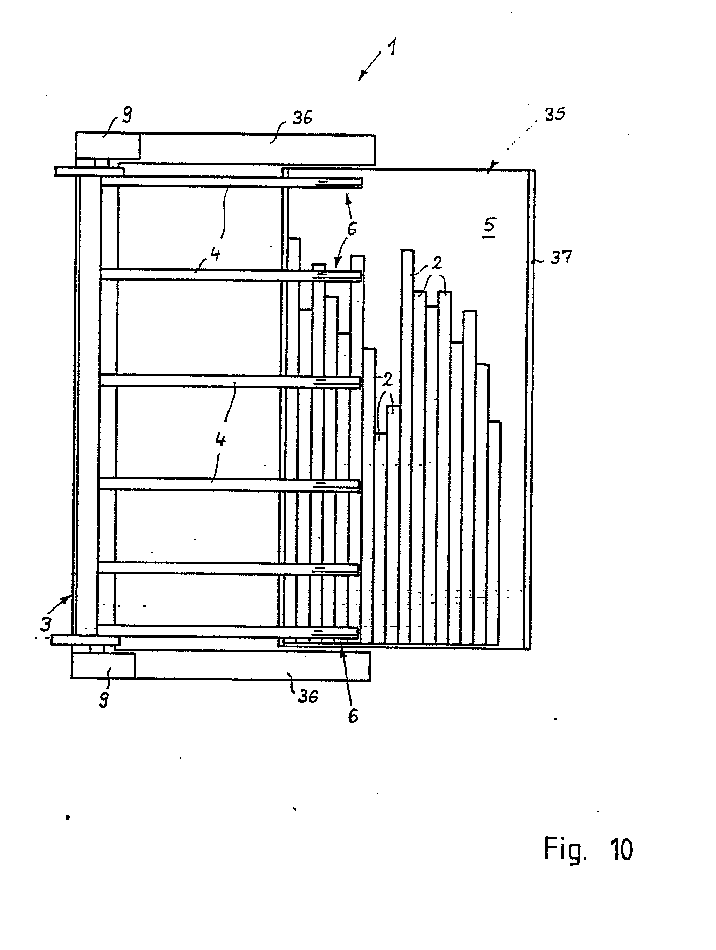

In Fig. 10 ist eine zweite Ausführungsform der erfindungsgemäßen Vorrichtung 1 in Draufsicht dargestellt, die in den wesentlichen Merkmalen und Konstruktionsdetails, also bezüglich der Aufhängevorrichtung 3 für die Rahmen 2 mit den auf- und absowie hin- und herverstellbaren Tragholmen 4 und der Vereinzelungsvorrichtung 6 der vorbeschriebenen Vorrichtung entspricht, die aufgrund der Rollen 8 verfahrbar ist. Der Unterschied besteht bei der Vorrichtung 1 nach Fig. 10 darin, daß sie als Magazin an einer weiterfördernden oder weiterverarbeitenden Vorrichtung für die Rahmen 2, z.B. einer Vorrichtung zum Auftragen von Dichtungsmasse auf die Rahmen stationär angeordnet ist und ihr ein Fördermittel mit einer Aufnahme 5 für die Rahmen 2 im Ausführungsbeispiel ein dafür besonders günstiger Förderwagen 35 zugehört, welcher an dieser Vorrichtung 1 gem. Fig. 10 in den Bereich der zurückgezogen Tragholme 4 paßt. Somit wird also die Funktion des Transportierens der Rahmen 2 und ihrer Magazinierung und Anhebung zu der Übergabevorrichtung 7 aufgeteilt. Dadurch kann vor allem in größeren Fertigungsbetrieben mit mehreren weiterverarbeitenden Maschinen für unterschiedliche Rahmengrößen eine beachtliche Einsparung gegenüber der Lösung erreicht werden, bei welcher eine Vorrichtung 1 selbst auch als verfahrbares Transportmittel dient.

Im Ausführungsbeispiel ist dabei auch bei dieser Vorrichtung nach Fig. 10 die Aufnahme 5 auf dem Förderwagen 35 zum Abstellen der Rahmen 2 ausgebildet, bevorzugt eine glatte Abstellfläche, auf welcher die Rahmen 2 wiederum karteikartenartig aufgestellt werden können.

Die Führungsstangen 9 haben in diesem Falle an ihrem unteren Ende für ihre stationäre Installierung Standfüße 36, die an ihrer Standfläche verankerbar sein können.

Denkbar wäre natürlich auch eine Kombination der beiden dargestellten Ausführungsformen von Vorrichtungen 1, indem an diesen Standfüßen 36 wahlweise Verankerungen für eine stationäre Installierung oder aber Rollen anbringbar sind.

Die Standfüße 36 stehen an den Führungsstangen 9 gemäß Fig. 10 parallel zu den Tragholmen 4 und in der Richtung der Tragholme 4 gegenüber den Führungsstangen 9 vor, in der sich die Tragholme 4 mit angehängten Rahmen 2 befinden, um die dann auftretende höhere Belastung besser in die Standfläche einleiten zu können.

Fig. 10 macht deutlich, daß der Förderwagen 35 mit seinem Fahrgestell und seiner Abstellfläche 5 zwischen die Standfüße 36 der Führungsstangen 9 unterhalb der Tragholme 4 paßt. Er kann also ohne weiteres in diesen Be reich eingefahren werden, um auf ihm befindliche Rahmen 2 in den Bereich der Tragholme 4 zu bringen, die dann die Rahmen in der schon eingangs beschriebenen Weise aufnehmen, vereinzeln und an die Übergabevorrichtung 7 oder eine sonstige weiterführende Vorrichtung übergeben können.

In Fig. 10 ist ferner noch angedeutet, daß die Abstellfläche 5 des Förderwagens 35 an zwei einander gegenüberliegenden, beim Einfahren unter die Tragholme 4 quer zu deren Verlauf angeordneten Seitenrändern Seitenbegrenzungen 37 und Abstützungen zum Anlehnen der abgestellten Rahmen 2 aufweist. Somit sind die Rahmen beim Einfahren bereits in der Richtung orientiert, in der sie für die Aufnahme durch die Tragholme 4 benötigt werden.

In Fig. 10 sind diese Seitenbegrenzungen 37 nur von oben her und schematisch dargestellt. Zweckmäßig ist es dabei, wenn als Seitenbegrenzungen 37 des Förderwagens 35 jeweils Rungen mit zwischen ihnen befindlichen Zwischenräumen vorgesehen sind, wobei die Zwischenräume in seitlicher Richtung größer als die entsprechende Abmessung der Tragholme 4 ist. Solche Rungen bilden also praktisch kammartige Seitenbegrenzungen, so daß die ebenfalls kammartig oder rechenartig angeordneten Tragholme gut dazwischen vor allem nach oben bewegt werden können, nachdem sie in die Rahmenöffnungen eingefahren sind.

Für besonders hoch bemessene Rahmen ist es vorteilhaft, wenn die rungenartigen Seitenbegrenzungen der Abstellfläche 5 der Vorrichtung 1 gemäß Fig. 1 oder auch des Förderwagens 35 wenigstens eine ihre Zwischenräume überbrückende Querstange tragen, die z.B. auf einem Auflager an den Rungen aufliegen kann und in vertikaler Anheberichtung vorzugsweise unbefestigt ist. Einerseits können dann die vertikalen Rahmenschenkel von auf der Abstellfläche 5 befindlichen Rahmen sich an dieser Stange seitlich abstützen, andererseits ergäbe sich beim Anheben der Tragholme selbst dann keine Beschädigung, wenn das eigentlich vorher erforderliche Ausheben dieser Querstange einmal vergessen würde.

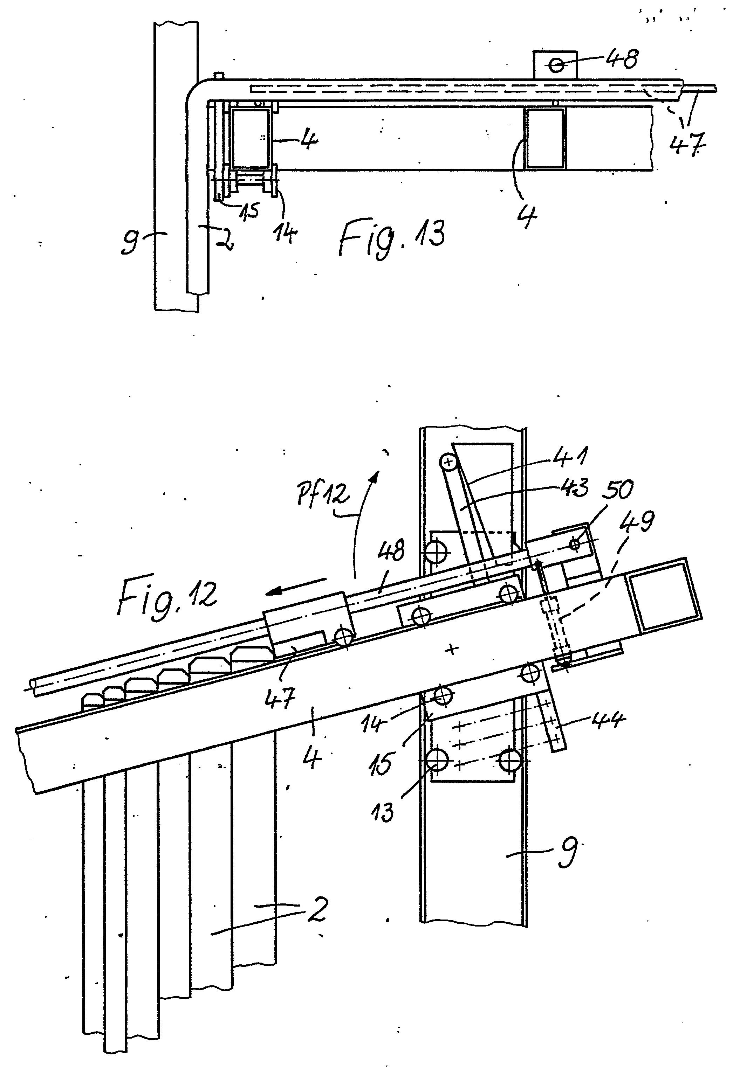

Eine ganz besonders vorteilhafte und zweckmäßige Ausgestaltungsmöglichkeit für eine möglichst zuverlässige Vereinzelung der Rahmen 2 ist in den Figuren 12 und 13 dargestellt. Fig. 12 zeigt dabei die durch die Auflaufschräge 41 der Führungsstange 9 in Schrägstellung gekippte Platte 15 mit einem von ihr gehaltenen Tragholm 4 in entsprechender Schrägstellung für die Vereinzelung der an ihm hängenden unterschiedlich breiten und großen Rahmen 2. Da diese Rahmen mit unterschiedlichen Abmessungen unterschiedliche Gewichte haben und unter Umständen auf den parallelen Tragholmen 4 unterschiedlich aufliegen und somit etwas abweichende Reibkräfte an den einzelnen Holmen entstehen können, könnte bei solchen sehr unterschiedlich zusammengesetzten Rahmenpaketen bei dem jeweiligen Weiterrutschen zu der Vereinzelungsvorrichtung Abweichungen von der gewünschten parallelen Orientierung der Rahmen 2 auftreten. Deshalb sind im Ausführungsbeispiel nach den Figuren 12 und 13 für den Parallelvorschub der an den Holmen 4 hängenden Rahmen 2 eine das Rahmenpaket hintergreifende Querstange 47 und Parallelführungen 48 für diese Querstange 47 vorgesehen, welche Parallelführungen 48 nicht nur parallel zueinander, sondern gemäß Fig. 12 in Gebrauchsstellung auch parallel zu den Holmen 4 und dabei in einem Abstand oberhalb der oberen Rahmenschenkel der aufgehängten Rahmen 2 verlaufen, der kleiner als die Dicke dieser Rahmen zwischen der Rahmeninnenseite und der Rahmenaußenseite ist. Man erkennt in Fig. 12 deutlich, daß dadurch ausgeschlossen wird, daß evtl. ein hinterer Rahmen 2 über einen vor ihm befindlichen Rahmen geschoben wird, was vor allem dann passieren könnte, wenn der hintere Rahmen größer und schwerer als der vor ihm befindlich ist.

Dabei sind die Führungen 48 vor allem bei abgesenkten Holmen 4, wenn diese also die Rahmen aufnehmen, nach oben gemäß dem Pfeil Pf 12 hochschwenkbar, was mit Hilfe eines Arbeitszylinders 49 um das Gelenk 50 erfolgen kann. Somit wird bei abgesenkten Holmen 4 die Aufnahme der Rahmen 2 nicht durch diese Führungen 48 behindert.

Die Querstange 47 für die Vorschubbewegung der Rahmen 2 ist mit den Holmen 4 zusammen schrägstellbar, wie man es in Fig. 12 deutlich erkennt. Sie kann entweder durch Schwerkraft oder ggfs. auch durch Motorkraft verschiebbar sein, wobei in ersterem Falle einfach das Gewicht der Querstange 47 und ihre gleichmäßige Parallelführung an den Parallelführungsstangen 48 für den ungestörten Vorschub der Rahmen 2 sorgt, wobei in vorteilhafter Weise die Führungsstangen 48 verhindern, daß ein hinterer Rahmen 2 einen vorderen überklettert.

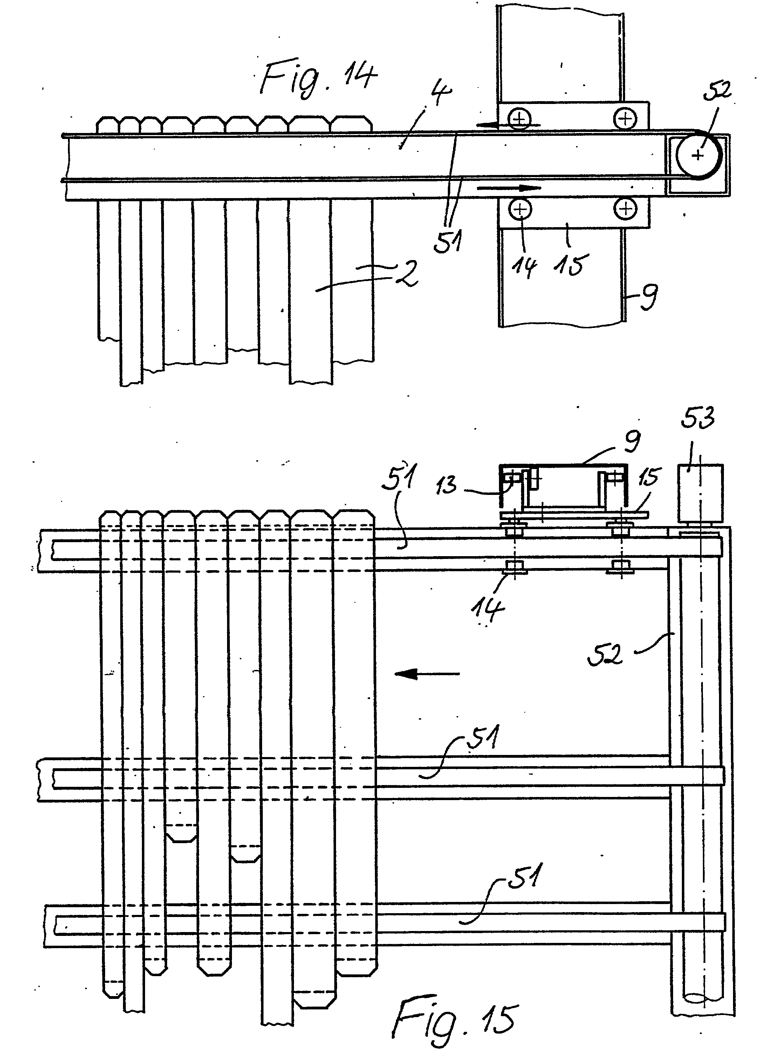

Eine abgewandelte Ausführungsform für den Vorschub der Rahmen 2 ist in den Figuren 14 und 15 erkennbar. In diesem Falle sind für einen motorischen Parallelvorschub der Rahmen 2 an den Holmen 4 Endlosbänder 51 vorgesehen, deren Umlenkwalze 52 mit dem Antriebsmotor 53 man vor allem in Fig. 15 erkennt. Dieser Antrieb befindet sich dabei auf der der Vereinzelungsvorrichtung abgewandten Seite der Holme 4 jenseits der Führungsstange 9. Auf der Oberseite dieser Endlosbänder 51 können die Rahmen 2 mit ihren oberen Rahmenschenkeln gemäß Fig. 14 aufliegen. Dabei sind die Endlosbänder 51 der Tragholme 4 synchron angetrieben, weil sie die gemeinsame angetriebene Umlenkwalze 52 haben.

Denkbar wäre noch, an den Endlosbändern 51 Mitnehmer zum Hintergreifen insbesondere des in Vorschubrichtung letzten Rahmens vorzusehen.

Fig. 15 zeigt dabei wiederum deutlich, daß die Rahmen 2 eines Rahmenpaketes sehr verschiedene Abmessungen haben können und somit ihre Auflage an den Tragholmen unterschiedlich sein kann, weshalb solche mechanischen Vorschubhilfen für den gleichmäßigen Parallelvorschub dieser unterschiedlichen Rahmen vorteilhaft sind.

**Patentansprüche**

1. Vorrichtung (1) zum Speichern und insbesondere auch zum Transportieren von Abstandhalterrahmen (2) für Isolierglasscheiben nach der Herstellung und vor ihrem Zusammenbau mit den Einzelscheiben einer Isolierglasscheibe mit einer Aufnahme (5) od. dgl. für die fertiggestellten Rahmen (2), dadurch gekennzeichnet, daß sie eine auf- und abverstellbare Aufhängevorrichtung (3) für die Rahmen (2) hat, die wenigstens zwei beabstandete Tragholme (4) oder dergleichen auf gleicher Höhe aufweist, daß unterhalb der Aufhängevorrichtung (3) die Aufnahme (5) od. dgl. angeordnet ist, über welche die Tragholme (4) etwa horizontal vorstehen, daß die Tragholme (4) gegenüber der Aufnahme (5) in ihrer Längserstreckungsrichtung rückziehbar, absenkbar und auf der Höhe des von den Rahmen (2) umgrenzten freien Raumes wieder vorschiebbar und mit den Rahmen (2) anhebbar ist und daß die Aufhängevorrichtung (3) außerdem eine Vereinzelungsvorrichtung (6) für die von ihr getragenen Rahmen (2) hat.

2. Vorrichtung nach Anspruch 1, dadurch gekennzeichnet, daß sie als Magazin an einer weiterfördernden oder weiterverarbeitenden Vorrichtung für die Rahmen (2), vorzugsweise einer Vorrichtung zum Auftragen von Dichtungsmasse auf die Rahmen, insbesondere stationär angeordnet ist und ihr zumindest ein Fördermittel mit einer Aufnahme (5) für die Rahmen (2), vorzugsweise ein Förderwagen (35) zugehört, welcher an der Vorrichtung (1) in den Bereich der zurückgezogenen Tragholme (4) paßt.

3. Vorrichtung nach Anspruch 1 oder 2, dadurch gekennzeichnet, daß die Aufnahme (5) unterhalb der Aufhängevorrichtung oder auf dem Förderwagen (35) zum Abstellen der Rahmen (2) ausgebildet ist, vorzugsweise eine Abstellfläche ist.

4. Vorrichtung nach Anspruch 1, dadurch gekennzeichnet, daß sie ein Fahrgestell mit Rädern (8) aufweist.

5. Vorrichtung nach einem der Ansprüche 1 bis 4, dadurch gekennzeichnet, daß die Aufhängevorrichtung (3) an wenigstens einer vorzugsweise zwei parallelen, insbesondere vertikalen Führungsstangen (9) hin- und her- sowie auf- und abwärtsbewegbar gelagert ist, wobei die Führungsstangen (9) vorzugsweise an einem Rand der Aufnahme oder der Abstellfläche (5) angeordnet sind, und daß am gegenüberliegenden Rand der Aufnahme oder der Abstellfläche (5) diese begrenzende Rungen (10) od. dgl. Abstützungen vorgesehen sind, die vorzugsweise lösbar befestigt sind.

6. Vorrichtung nach einem der Ansprüche 1 bis 5, dadurch gekennzeichnet, daß die vertikalen Führungsstangen (9) im Querschnitt hohl und einseitig offen, vorzugs weise U- oder C-förmig ausgebildet sind, wobei die Öffnungen (11) der Profile einander zugewandt sind, und daß die Aufhängevorrichtung (3) für jede Führungsstange (9)ein Fahrgestell (12) hat, welches für die geführte Auf- und Abwärtsbewegung in das Innere dieses Profiles eingreifende Rollen (13) hat, wobei außerdem an parallelen horizontalen Führungsstangen oder Tragholmen (4) selbst der Aufhängevorrichtung (3) außenseitig weitere Rollen (14) für deren horizontale Verschiebung angreifen, wobei für die horizontale Verschiebung der Tragholme (4) an dem Fahrgestell (12) vorzugsweise je zwei die Tragholme (4) oder deren Führung von oben und je zwei sie von unten beaufschlagende Rollen (14) vorgesehen sind.

7. Vorrichtung nach einem der Ansprüche 1 bis 6, dadurch gekennzeichnet, daß die vier Führungsrollen (14) eines Fahrgestelles (12) für die Horizontalverstellung der Tragholme (4) an einer Platte (15) gelagert sind, die gegenüber der der Abstellfläche (5) zugewandten Seite der Führungsstangen (9) zurückversetzt ist oder bündig damit abschließt und vorzugsweise nach der anderen Seite der Führungsstange (9) übersteht.

8. Vorrichtung nach einem der Ansprüche 1 bis 7, dadurch gekennzeichnet, daß die vertikalen Führungsstangen (9) und die Führungsvorrichtung für die Aufhängevorrichtung (3) derart ausgebildet sind, daß in der obersten Position der Aufhängevorrichtung (3) die Tragholme (4) mit ihrem freien Ende soweit schräg nach unten kippbar sind, insbesondere um etwa 10° bis 20° gegenüber einer Horizontalen, daß die angehängten Rahmen (2) aufgrund der Schwerkraft selbsttätig gegen dieses Ende hin gleiten, wobei ein Anschlag (16) für diese Rahmen (2) vorgesehen ist.

9. Vorrichtung nach einem der Ansprüche 1 bis 8, dadurch gekennzeichnet, daß zur Vereinzelung der von der Aufhängevorrichtung (3) getragenen Rahmen (2) ein Hebel (22) im Bereich des Anschlages (16) für die Rahmen (2) an den Tragholmen (4) schwenkbar gelagert ist, welcher mit einem Ende (23) jeweils den vordersten Rahmen (2) im Bereich des Anschlages (16) untergreift und von einer Betätigungsvorrichtung (25) beaufschlagt ist, wobei der Schwenkweg des Hebels (22) im Bereich des Anschlages (16) wenigstens der Höhe dieses Anschlages (16) entspricht.

10. Vorrichtung nach einem der Ansprüche 1 bis 9, dadurch gekennzeichnet, daß die der Anschlagfläche abgewandte Seite des Anschlages (16) schräg gegen die Oberseite des Holmes (4) abfällt.

11. Vorrichtung nach einem der Ansprüche 1 bis 10, dadurch gekennzeichnet, daß der Anschlag (16) gegenüber der Stirnseite (27) des Hebels (22) zurückversetzt ist, so daß diese Stirnseite (27) ihrerseits so lange einen Anschlag für die verbleibenden Rahmen (2) bildet, wie der Hebel (22) mit einem vereinzelten Rahmen (2) in Anhebeposition ist.

12. Vorrichtung nach einem der Ansprüche 1 bis 11, dadurch gekennzeichnet, daß zur Beaufschlagung des Hebels (22) zum Erfassen jeweils des vordersten Rahmens (2) ein Nocken, Stößel (26), insbesondere ein druckmittelbetriebener Stößel od. dgl. vorgesehen ist, wobei insbesondere an jedem Tragholm (4) vorzugsweise bei einem als Hohlprofil ausgebildeten Tragholm (4) in dessen Innerem , ein zum Beispiel druckmittelbetriebener Stößel (26) od. dgl. zur Beaufschlagung des Hebels (22) vorgesehen ist.

13. Vorrichtung nach Anspruch 12, dadurch gekennzeichnet, daß der Stößel (26) etwa in Orientierungsrichtung des Tragholmes (4) bewegbar ist und an seinem freien Ende eine den Hebel (22) untergreifende Schräge od.dgl. Führungsfläche (34) zum Anheben des Hebels (22) hat und daß die von dem Stößel (26) und dessen Führungskörper mit der Schrägfläche (34) beaufschlagte Seite des Hebels (22) vorzugsweise ebenfalls abgeschrägt ist und in ihrer Schrägung der der Führungsfläche 34 entspricht.

14. Vorrichtung nach einem der Ansprüche 1 bis 13, dadurch gekennzeichnet, daß auf der Oberseite der Tragholme (4) in deren Längsrichtung wenigstens eine glatte, blanke, im Querschnitt vorzugsweise ballige Gleitbahn (28) für die Rahmen (2) angeordnet ist.

15. Vorrichtung nach einem der Ansprüche 1 bis 14, dadurch gekennzeichnet, daß zum Abkippen der Tragholme (4) in deren Obenstellung die Führung für das Fahrgestell (12) der Führungstangen (9) in ihrem oberen Endbereich eine entsprechend schräge Abweichung hat.

16. Vorrichtung nach einem der Ansprüche 1 bis 15, dadurch gekennzeichnet, daß die Führungsstangen (9) für das Fahrgestell (12) vorzugsweise in ihrer Höhe und/oder bezüglich ihrer Neigung verstellbare Auflaufschrägen (41) als Kippvorrichtung tragen und daß die die Führungsrollen (14) für die Holme (4) aufweisende Platte (15) gegen eine Rückstellkraft, vorzugsweise gegen Federkraft, gegenüber dem die Führungsrollen (13) aufweisenden Schlitten schwenkbar ist und einen mit der Auflaufschräge (14) zusammenwirkenden, an ihr starr angreifenden Auslenkungsvorsprung (43) hat.

17. Vorrichtung nach Anspruch 16, dadurch gekennzeichnet, daß der Auslenkungsvorsprung (43) und die Schwenkachse (38) für die Platte (15) seitlich ihrer Mitte angeordnet sind und an einem Hebelarm (44) an der Platte (15) Zugfedern (42) zur Erzeugung der Rückstellkraft angreifen, die mit ihren entgegengesetzten Enden an dem Schlitten (45) befestigt sind.

18. Vorrichtung nach einem der Ansprüche 1 bis 3 oder 5, bis 17, dadurch gekennzeichnet, daß die Führungsstangen (9) an ihrem unteren Ende für ihre stationäre Installierung Standfüße (36) haben, die gegebenenfalls an ihrer Standfläche verankerbar sind, und daß die Standfüße (36) an den Führungsstangen (9) vorzugsweise parallel zu den Tragholmen (4) und in Richtung der Tragholme (4) gegenüber den Führungsstangen (9) vorstehen, in der sich die Tragholme (4) mit abgehängten Rahmen (2) befinden.

19. Vorrichtung nach einem der vorstehenden Ansprüche, dadurch gekennzeichnet, daß der/die Förderwagen (35) mit seinem Fahrgestell und vorzugsweise seiner Aufnahme oder Abstellfläche (5) zwischen die Standfüße (36) der Führungsstangen (9) unterhalb der Tragholme (4) paßt.

20. Vorrichtung nach einem der Ansprüche 1 bis 19, dadurch gekennzeichnet, daß die Abstellfläche (5) des Förderwagens (3) zumindest an zwei einander gegenüberliegenden, beim Einfahren unter die Tragholme (4) quer zu deren Verlauf angeordneten Seitenrändern Seitenbegrenzungen (37) und Abstützungen zum Anlehnen der abgestellten Rahmen (2) aufweist und daß als Seitenbegrenzungen (37) des Förderwagens (35) jeweils Rungen od.dgl. mit zwischen ihnen befindlichen Zwischenräumen vorgesehen sind, wobei die Zwischenräume in seitlicher Richtung größer als die entsprechende Abmessung der Tragholme (4) sind.

21. Vorrichtung nach einem der vorstehenden Ansprüche, dadurch gekennzeichnet, daß die rungenartigen Seitenbegrenzungen der Abstellfläche (5) der Vorrichtung und/oder des Förderwagens (35) wenigstens eine ihre Zwischenräume überbrückende Querstange od.dgl. tragen, die auf einem Auflager an den Rungen aufliegt und vorzugsweise in vertikaler Anheberichtung unbefestigt ist.

22. Vorrichtung nach einem der Ansprüche 1 bis 21, dadurch gekennzeichnet, daß für den Parallelvorschub der an den Holmen (4) hängenden Rahmen (2) eine das Rahmenpaket hintergreifende Querstange (47) und Parallelführungen (48) für diese Querstange (47) vorgesehen sind, welche Parallelführungen (48) in einem Abstand oberhalb der oberen Rahmenschenkel verlaufen, der kleiner als die Dicke dieser Rahmen ist.

23. Vorrichtung nach Anspruch 22, dadurch gekennzeichnet, daß die Führungen (48) für die Querstange od.dgl. insbesondere bei abgesenkten Holmen (4) nach oben hochgeschwenkt oder hochschwenkbar sind.

24. Vorrichtung nach einem der Ansprüche 1 bis 23, dadurch gekennzeichnet, daß die Querstange (47) für die Vorschubbewegung der Rahmen (2) mit den Holmen (4) schrägstellbar und durch Schwerkraft und/oder Motorkraft verschiebbar ist.

25. Vorrichtung nach einem der Ansprüche 1 bis 24, dadurch gekennzeichnet, daß für einen motorischen Parallelvorschub der Rahmen (2) an den Holmen (4) an diesen Endlosbänder (51) vorgesehen sind, auf deren Oberseite die Rahmen aufliegen oder die ggfs. Mitnehmer zum Hintergreifen insbesondere des in Vorschubrichtung letzten Rahmens haben, wobei die Enlosbänder (51) der Tragholme (4) synchron angetrieben sind.

## Claims

1. A device (1) for storing and particularly also for transporting spacer frames (2) of insulating glazing after production and before the frames are fitted together with the individual panes of insulating glazing, including a carrier (5) or the like for the completed frames (2), characterized by having a hanging apparatus (3) for the frames (2) which is adjustable up and down and has at least two spaced supporting spars (4) or the like on a level, by the carrier (5) or the like being disposed underneath the hanging apparatus (3) and the supporting spars (4) projecting approximately horizontally above said carrier, by the supporting spars (4) being adapted to be retracted relative to the carrier (5) in the direction of their longitudinal expanse, to be lowered and advanced again at the level of the free space defined by the frames (2) and to be lifted together with the frames (2), and by the hanging apparatus (3) also having a destacker (6) for the frames (2) it carries.

2. The device as claimed in claim 1, characterized by being disposed, particularly in a stationary manner, as a magazine feed at a device for the further conveyance or treatment of the frames (2), preferably at a device for applying sealing compound to the frames, and by including at least one conveying appliance with a carrier (5) for the frames (2), preferably a trolley (35), the latter fitting onto the device (1) into the region of the retracted supporting spars (4).

3. The device as claimed in claim 1 or claim 2, characterized in that the carrier (5) underneath the hanging apparatus or on the trolley (35) is devised for depositing the frames (2) and is preferably a storage surface.

4. The device as claimed in claim 1, characterized by having an undercarriage with wheels (8).

5. The device as claimed in any one of claims 1 to 4, characterized in that the hanging apparatus (3) is mounted on at least one, preferably two, parallel, particularly vertical guide rods (9) so as to be movable to and fro as well as up and down, the guide rods (9) being arranged preferably at one edge of the carrier or storage surface (5), and that at the opposite edge of the carrier or storage surface (5) provision is made for stanchions (10) or suchlike supports which bound said carrier or storage surface and are preferably detachably attached.

6. The device as claimed in any one of claims 1 to 5, characterized in that the vertical guide rods (9) are hollow in cross section and open on one side, preferably being U-shaped or C-shaped, the openings (11) of the profiles facing one another, and that the hanging apparatus (3) has a carriage (12) for each guide rod (9), said carriage having rollers (13) engaging into the interior of said profile for the guided upward and downward motion, in addition rollers (14) engaging the outside of parallel, horizontal guide rods or the supporting spars (4) themselves of the hanging apparatus (3) for their horizontal movement, for the horizontal movement of the supporting spars (4) the carriage (12) being provided with in each case preferably two rollers (14) acting upon the supporting spars (4) or guide thereof from above and two rollers (14) acting upon said supporting spars or guide thereof from below.

7. The device as claimed in any one of claims 1 to 6, characterized in that the four guide rollers (14) of a carriage (12) for the horizontal movement of the supporting spars (4) are mounted on a plate (15) which is set back relative to that side of the guide rods (9) which faces the storage surface (5) or is flush therewith and preferably projects towards the other side of the guide rod (9).

8. The device as claimed in any one of claims 1 to 7, characterized in that the vertical guide rods (9) and the guiding device for the hanging apparatus (3) are devised in such a way that in the uppermost position of the hanging apparatus (3) the supporting spars (4) are tiltable with their free end downwardly at such an angle, particularly by approximately 10° to 20° relative to a horizontal line, that the suspended frames (2) automatically slide towards said end through gravity, a stop (16) being provided for said frames (2).

9. The device as claimed in any one of claims 1 to 8, characterized in that to destack the frames (2) carried by the hanging apparatus (3) a lever (22) is swivel-mounted on the supporting spars (4) in the region of the stop (16) for the frames (2), said lever with one end (23) engaging the foremost frame (2) from underneath in the region of the stop (16) and being acted upon by an actuating device (25), the swivel path of the lever (22) in the region of the stop (16) corresponding at least to the height of said stop (16).

10. The device as claimed in any one of claims 1 to 9, characterized in that the stop (16) has its side averted from the stop face sloping off towards the upper side of the spar (4).

11. The device as claimed in any one of claims 1 to 10, characterized in that the stop (16) is set back relative to the end face (27) of the lever (22), so that said end face (27) for its part forms a stop for the remaining frames (2) as long as the lever (22) together with a destacked frame (2) is in the raised position.

12. The device as claimed in any one of claims 1 to 11, characterized in that a cam, a ramming tool (26), particularly a ramming tool or the like operated by pressure medium, is provided for acting upon the lever (22) to pick up the foremost frame (2), a ramming tool (26) or the like, for example one operated by pressure medium, for acting upon the lever (22) being provided in particular on each supporting spar (4), preferably in the interior of a supporting spar (4) in the form of a hollow section.

13. The device as claimed in claim 1, characterized in that the ramming tool (26) is movable approximately in the direction of orientation of the supporting spar (4) and the free end of said ramming tool has a slant engaging the lever (22) from underneath or a like guide surface (34) for raising the lever (22), and that that side of the lever (22) which is acted upon by the ramming tool (26) and guide body thereof with the angular surface (34) is preferably also inclined and corresponds in its inclination to that of the guide surface (34).

14. The device as claimed in any one of claims 1 to 13, characterized in that at least one smooth, bare slideway (28) for the frames (2), a slideway preferably convex in cross section, is arranged on the upper side of the supporting spars (4) in the longitudinal direction thereof.

15. The device as claimed in any one of claims 1 to 14, characterized in that for tipping the supporting spars (4) in their upper position, the guide for the carriage (12) of the guide rods (9) has in its upper end region a correspondingly inclined deviation.

16. The device as claimed in any one of claims 1 to 15, characterized in that the guide rods (9) for the carriage (12) bear inclines (41) preferably adjustable in height and/or with respect to their inclination as the tilting device, and that the plate (15) featuring the guide rollers (14) for the spars (4) is adapted to swivel against a restoring force, preferably against spring tension, relative to the carriage featuring the guide rollers (13) and has a deflecting projection (43) co-operating with and rigidly engaging the incline (14).

17. The device as claimed in claim 16, characterized in that the deflecting projection (43) and the swivel axis (38) for the plate (15) are off-centre with respect to the latter, and a lever arm (44) on the plate (15) is engaged by tension springs (42) for generating the restoring force, said tension springs having their opposite ends attached to the carriage (45).

18. The device as claimed in any one of claims 1 to 3 or 5 to 17, characterized in that for stationary installation the lower end of the guide rods (9) have legs (36) which are possibly adapted to be anchored to their base, and that the legs (36) on the guide rods (9) protrude relative to the latter, preferably parallel to the supporting spars (4) and in that direc-

13

tion in which the supporting spars (4) together with suspended frames (2) are situated.

19. The device as claimed in any one of the preceding claims, characterized in that the trolley(s) (35) together with its undercarriage and preferably its carrier or storage surface (5) fits between the legs (36) of the guide rods (9) underneath the supporting spars (4).

20. The device as claimed in any one of claims 1 to 19, characterized in that the storage surface (5) of the trolley (3) has side limits (37) and supports serving for the deposited frames (2) to lean against and situated at at least two opposing side edges disposed transversely to the course of the supporting spars (4) when moved in under the latter, and that stanchions or the like with spaces in between them are in each case provided as the side limits (37) of the trolley (35), said spaces being larger in the lateral direction than the corresponding dimension of the supporting spars (4).

21. The device as claimed in any one of the preceding claims, characterized in that the stanchion-like side limits of the storage surface (5) of the device and/or of the trolley (35) bear at least one cross bar or the like bridging their interspaces, said cross bar resting upon a support on the stanchions and preferably being unfixed in the vertical direction of lift.

22. The device as claimed in any one of claims 1 to 21, characterized in that for the parallel feed of the frames (2) suspended from the spars (4) there is provided a cross bar (47) engaging behind the set of frames and parallel guides (48) for said cross bar (47), said parallel guides (48) running above the upper sides of the frames at a distance which is smaller than the thickness of said frames.

23. The device as claimed in claim 22, characterized in that the guides (48) for the cross bar or the like are swung up or are adapted to be swung up, particularly when the spars (4) are lowered.

24. The device as claimed in any one of claims 1 to 23, characterized in that the cross bar (47) for the feed motion of the frames (2) is angularly settably together with the spars (4) and is movable by gravity and/or motor power.

25. The device as claimed in any one of claims 1 to 24, characterized in that for motor-operated, parallel feed of the frames (2) on the spars (4) the latter are provided with endless belts (51) on the surface of which the frames rest, or said endless belts may have entrainment means for engaging behind particularly the last frame in the direction of feed, the endless belts (51) of the supporting spars (4) being driven in synchronism.

**Revendications**

1. Dispositif (1) pour emmagasiner et aussi, en particulier, pour transporter des cadres espaceurs (2) pour vitrages isolants après leur fabrication et avant leur assemblage avec les vitres individuelles d'un vitrage isolant, comprenant un receptacle (5) ou similaire pour les cadres terminés (2), caractérisé par le fait qu'il comporte un dispositif de suspension (3) pour les cadres (2) qui peut être déplacé vers le haut et vers le bas et qui présente au moins deux poutres porteuses (4) ou similaires à distance l'une de l'autre et à la même hauteur, par le fait que le réceptacle (5) ou similaire, sur lequel les poutres porteuses (4) font saillie de manière approximativement horizontale, est disposé au-dessous du dispositif de suspension (3), par le fait que les poutres porteuses (4), par rapport au réceptacle (5), peuvent être rétractées dans la direction de leur extension longitudinale, abaissées, à nouveau avancées au niveau de l'espace libre entouré par les cadres (2), et soulevées avec les cadres (2), et par le fait que le dispositif de suspension (3) comporte en outre un dispositif de séparation (6) pour les cadres (2) qui sont portés par lui.

2. Dispositif selon la revendication 1, caractérisé par le fait qu'il est disposé sous forme de magasin, en particulier de manière fixe, sur un dispositif de déplacement ultérieur ou de traitement ultérieur des cadres (2), de préférence un dispositif pour appliquer sur les cadres une matière assurant l'étanchéité, et qu'il comporte au moins un moyen de déplacement comprenant un réceptacle (5) pour les cadres (2), de préférence un wagonnet de transport (35) qui s'ajuste sur le dispositif (1) dans la région des poutres porteuses (4) rétractées.

3. Dispositif selon la revendication 1 ou 2, caractérisé par le fait que le réceptacle (5) est réalisé au-dessous du dispositif de suspension ou sur le wagonnet de transport (35) pour y poser les cadres (2), et que c'est de préférence une surface d'appui.

4. Dispositif selon la revendication 1, caractérisé par le fait qu'il comporte un châssis muni de roues (8).

5. Dispositif selon l'une des revendications 1 à 4, caractérisé par le fait que le dispositif de suspension (3) est monté sur l'une au moins de deux glissières (9), de préférence parallèles, et en particulier verticales, de façon à pouvoir se déplacer en va-et-vient, ainsi que vers le haut et vers le bas, les glissières (9) étant disposées de préférence sur un bord du réceptacle ou de la surface d'appui (5), et par le fait qu'il est prévu, sur le bord opposé du réceptacle ou de la surface d'appui (5), une ridelle (10) ou des appuis similaires qui limitent celle-ci et qui sont fixés de préférence de manière amovible.

6. Dispositif selon l'une des revendications 1 à 5, caractérisé par le fait que les glissières (9) verticales sont creuses et ouvertes d'un côté en section transversale, de préférence en forme de U ou de C, les ouvertures (11) des profilés étant tournées l'une vers l'autre, et par le fait que le dispositif de suspension (3) comporte, pour chaque glissière (9), un chariot (12) qui est muni de galets (13) en prise dans l'intérieur de ce profilé pour le guidage du déplacement vers le haut et vers le bas, cependant que d'autres galets (14) sont en outre en prise du côté extérieur sur des glissières horizontales et parallèles ou sur des poutres porteuses elles-mêmes (4) du dispositif de suspension (3) pour leur coulissement horizontal, et qu'il est prévu de préférence sur le chariot (12), pour le coulissement horizontal des poutres porteuses (4), deux galets (14) qui agissent à chaque fois sur les poutres porteuses (4) ou sur leur guidage depuis le haut, et deux que agissent à chaque fois sur elles depuis le bas.

7. Dispositif selon l'une des revendications 1 à 6, caractérisé par le fait que les quatre galets de guidage (14) d'un chariot (12) qui sont destinés au déplacement horizontal des poutres porteuses (4) sont montés tournants sur une plaque (15) qui est décalée vers l'arrière par rapport au côté des glissières (9) tourné vers la surface d'appui (5), ou qui se termine de niveau avec lui, et qui fait de préférence saillie vers l'autre côté de la glissière (9).

8. Dispositif selon l'une des revendications 1 à 7, caractérisé par le fait que les glissières verticales (9) et le dispositif de guidage destiné au dispositif de suspension (3) sont réalisés de telle manière que, dans la position la plus haute du dispositif de suspension (3), les poutres porteuses (4) peuvent basculer obliquement vers le bas par leur extrémité libre, en particulier de 10° à 20° environ par rapport à l'horizontale, jusqu'à ce que les cadres suspendus (2) puissent glisser d'eux-mêmes vers cette extrémité par gravité, une butée (16) étant prévue pour ces cadres (2).

9. Dispositif selon l'une des revendications 1 à 8, caractérisé par le fait que, pour séparer les cadres (2) portés par le dispositif de suspension (3), un levier (22) est monté pivotant dans la région de la butée (16) destinée aux cadres (2) sur les poutres porteuses (4), levier dont une extrémité (23) vient en prise à chaque fois par en dessous, dans la région de la butée (16), avec le cadre (2) situé le plus en avant, et sur lequel agit un dispositif d'actionnement (25), le trajet de pivotement du levier (22) dans la région de la butée (16) correspondant au moins à la hauteur de cette butée (16).

10. Dispositif selon l'une des revendications 1 à 9, caractérisé par le fait que le côté de la butée (16) qui est opposé à la surface de butée descend obliquement vers la face supérieure de la poutre (4).

11. Dispositif selon l'une des revendications 1 à 10, caractérisé par le fait que la butée (16) est décalée vers l'arrière par rapport à la face frontale (27) du levier (22), de sorte que cette face frontale (27) constitue pour sa part une butée pour les cadres restants (2), aussi longtemps que le levier (22) est en position soulevée avec un cadre séparé (2).

12. Dispositif selon l'une des revendications 1 à 11, caractérisé par le fait que, pour actionner le levier (22) afin de saisir le cadre (2) qui est à chaque fois le plus en avant, il est prévu une came, un coulisseau (26), en particulier un coulisseau actionné par un moyen sous pression, ou similaire, un coulisseau (26) actionné par exemple par un moyen sous pression ou similaire étant prévu pour l'actionnement du levier (22), en particulier sur chaque poutre porteuse (4), et de préférence à l'intérieur de celle-ci dans le cas d'une poutre porteuse (4) réalisée sous la forme d'un profilé creux.

13. Dispositif selon la revendication 12, caractérisé par le fait que le coulisseau (26) est mobile sensiblement dans la direction selon laquelle est orientée la poutre porteuse (4), et qu'il comporte à son extrémité libre une rampe oblique ou une surface de guidage similaire (34) qui vient en prise sous le levier (22) pour soulever ce levier (22), et par le fait que le côté du levier (22), sur lequel agit le coulisseau (26) et son corps de guidage muni de la rampe oblique (34), est de préférence également taillé en biseau et correspond par son inclinaison à celle de la surface de guidage (34).

14. Dispositif selon l'une des revendications 1 à 13, caractérisé par le fait qu'au moins une glissière (28) lisse, polie, de préférence convexe en section transversale, et destinée aux cadres (2), est disposée sur la face supérieure des poutres porteuses (4) dans la direction longitudinale de celles-ci.

15. Dispositif selon l'une des revendications 1 à 14, caractérisé par le fait que, pour le basculement des poutres porteuses (4) dans leur position haute, le guidage destiné au chariot (12) des glissières (9) comprend une déviation oblique correspondante dans la région de son extrémité supérieure.

16. Dispositif selon l'une des revendications 1 à 15, caractérisé par le fait que les glissières (9) destinées au chariot (12) portent, comme dispositif de basculement, une rampe oblique (41) qui est de préférence réglable en ce qui concerne sa hauteur et/ou son inclinaison, et par le fait que la plaque (15) qui porte les galets de guidage (14) destinés aux poutres (4) peut pivoter à l'encontre d'une force de rappel, de préférence de la force d'un ressort, par rapport au chariot que est muni des galets de guidage (13), et qu'elle comporte un prolongement déflecteur (43) qui coopère avec la rampe oblique (41) et qui vient en prise rigidement avec celle-ci.

17. Dispositif selon la revendication 16, caractérisé par le fait que le prolongement déflecteur (43) et l'axe de pivotement (38) destiné à la plaque (15) sont disposés latéralement par rapport à leur milieu, et que des ressorts de traction (42) sont en prise avec un bras de levier (44) ménagé sur la plaque (15) pour engendrer la force de rappel, ressorts qui sont fixés au chariot (45) par leurs extrémités opposées.

18. Dispositif selon l'une des revendications 1 à 3 ou 5 à 17, caractérisé par le fait que les glissières (9) comportent à leur extrémité inférieure, pour leur montage fixe, des semelles (36) qui peuvent être ancrées dans leur surface d'appui, le cas échéant, et par le fait que les semelles (36) ménagées sur les glissières (9) sont en saillie, de préférence parallèlement aux poutres porteuses (4) et dans la direction des poutres porteuses (4), par rapport aux glissières (9) dans lesquelles se trouvent les poutres porteuses (4) avec les cadres (2) qui y sont suspendus.

19. Dispositif selon l'une des revendications précédentes, caractérisé par le fait que le ou les wagonnets de transport (35) s'ajustent par leur châssis et, de préférence, par leur réceptacle ou leur surface d'appui (5), entre les semelles (36) des glissières (9) au-dessous des poutres porteuses (4).

20. Dispositif selon l'une des revendications 1 à 19, caractérisé par le fait que la surface d'appui (5) du wagonnet de transport (35) comporte des limitations latérales (37), au moins sur deux bords latéraux se faisant face et disposés transversalement par rapport aux poutres porteuses (4) lorsqu'elle pénètre sous celles-ci, et des appuis pour l'adossement des cadres déposé (2), et par le fait que, comme limitations latérales (37) du wagonnet de transport (35), il est prévu à chaque fois des poteaux de ridelle ou similaires comprenant des intervalles entre eux, les intervalles étant plus grands dans le sens latéral que les dimensions correspondantes des poutres porteuses (4).

21. Dispositif selon l'une des revendications précédentes, caractérisé par le fait que les limitations latérales en forme de ridelles de la surface d'appui (5) du dispositif et/ou du wagonnet de transport (35) portent au moins une traverse ou similaire qui passe sur leurs intervalles, qui repose sur un support ménagé sur la ridelle, et qui, de préférence, n'est pas fixée dans la direction verticale de soulèvement.

22. Dispositif selon l'une des revendications 1 à 21, caractérisé par le fait que, pour l'avancement en parallèle des cadres (2) qui sont suspendus aux poutres (4), il est prévu une traverse (47) qui vient en prise derrière le paquet de cadres, et des guidages parallèles (48) destinés à cette traverse (47), ces guidages parallèles (48) s'étendant au-dessus des bords supérieurs des cadres à une distance qui est inférieure à l'épaisseur de ces cadres.

23. Dispositif selon la revendication 22, caractérisé par le fait que les guidages (48) destinés à la traverse ou similaire sont basculés vers le haut ou peuvent basculer vers le haut, en particulier lorsque les poutres (4) sont abaissées.

24. Dispositif selon l'une des revendications 1 à 23, caractérisé par le fait que la traverse (47) destinée au déplacement d'avancement des cadres (2) peut être placée en position oblique avec les poutres (4) et déplacée par gravité et/ou par la force d'un moteur.

25. Dispositif selon l'une des revendications 1 à 24, caractérisé par le fait que, pour un avancement en parallèle motorisé des cadres (2) sur les poutres (4), il est prévu sur celles-ci des bandes sans fin (51) sur la face supérieure desquelles reposent les cadres, ou qui comportent, le cas échéant, des taquets d'entraînement pour venir en prise par derrière, en particulier avec le cadre qui est le dernier dans la direction d'avancement, les bandes sans fin (51) des poutres porteuses (4) étant entraînées en synchronisme.

Fig. 1

EP 0 261 471 B1

Fig. 2

Fig. 3

Fig. 4

Fig. 4a

Fig. 5

Fig. 6

EP 0 261 471 B1

Fig. 7

EP 0 261 471 B1

Fig. 7a

EP 0 261 471 B1

Fig. 8

Fig. 9

Fig. 10

Fig. 11

*Fig. 13*

*Fig. 12*

Fig. 14

Fig. 15